# EUROPEAN PATENT SPECIFICATION

(11) **EP 3 537 881 B1**
(45) Date of publication and mention of the grant of the patent: **30.12.2020**
(21) Application number: 17808115.4
(22) Date of filing: 08.11.2017
(51) Int. Cl.: A21D 13/064, A21D 2/26, A21D 2/36, A21D 13/04, A21D 13/066, A21D 13/045

(54) **METHODS OF FORMING BAKERY PRODUCTS FROM PARTICULATE MIXTURES**
VERFAHREN ZUR HERSTELLUNG VON BACKWAREN AUS PARTIKULÄREN MISCHUNGEN
PROCEDES DE PREPARATION DE PRODUITS DE BOULANGERIE A PARTIR DE MÉLANGES PARTICULAIRES

(30) Priority: 10.11.2016 GB 201618990
(43) Date of publication of application: 18.09.2019
(73) Proprietor: Direct Food Ingredients Limited, Macclesfield, Cheshire SK11 6JZ (GB)
(72) Inventor: WAREING, Mark, Macclesfield Cheshire SK11 6JZ (GB)
(74) Representative: Harrison IP Limited
(86) International application number: PCT/GB2017/053352
(87) International publication number: WO 2018/087533

(56) References cited:
- WO-A1-2013/071406
- WO-A1-2015/197760
- CN-A- 105 794 912
- US-A1- 2014 161 963
- US-A1- 2016 143 333
- US-B1- 6 221 418
- DATABASE GNPD [Online] MINTEL; November 2015 (2015-11), Holy Nuts: "Paleo Bread Mix", XP002777807, Database accession no. 3550819
- DATABASE GNPD [Online] MINTEL; June 2014 (2014-06), Virginia Health Food: "Brilliant Bread for a Light Soft Sandwich Bread", XP002777808, Database accession no. 2484917
- DATABASE GNPD [Online] MINTEL; September 2015 (2015-09), Enjoy Life Natural Brands: "Pizza Crust Mix with Ancient Grains", XP002777809, Database accession no. 3319803

## Description

The present invention relates to a high protein food product, suitable to be cooked in a microwave oven. In particular, the food is in the form of bread or cake, suitably a muffin. There is also provided a method of forming such a food product.

### Background to the Invention

Many nutritional supplements are available in the form of simple, high protein, instant powder-based drinks. These are often not very palatable, with poor flavour and they lack the textural complexity of 'real' food. Whilst these drinks are convenient for consumption at short notice, they are often deficient in fibre and may lack the vitamins and minerals supplied in meal replacers for example. Lack of fibre can result in constipation and other negative effects associated with a low fibre diet. There are a limited number of more complete, protein-boosted foods available for the food supplements and dietary market (including Atkins type). These comprise for example pre-made, high protein pan cakes, bread, bread substitutes, pizza bases and cakes such as muffins. In principle, these are more varied and stimulating to eat and represent a welcome change for the consumer, compared to traditional protein drinks. It is possible to include high levels of dietary fibre in these 'complete' foods. However, these premanufactured products, once purchased, present a limited shelf-life. The products often contain less protein per serving, than high protein drinks, since high protein bakery products are difficult to manufacture. There are also extruded high protein granola bars available although these either contain high sugar levels or use polyols, with laxative effects.

There are a limited number of 'instant', high protein powder mixes available for bakery products such as bread substitutes and muffins. Whilst these are convenience foods in that the consumer can convert the powder mix, on-demand, to a high protein food; they are generally prepared by traditional bakery techniques. The time taken to produce these foods means they cannot accurately be classified as convenience foods. A high protein muffin can take 30 minutes or more to prepare using a traditional bakery oven and a yeast-leavened bread - up to two hours. In these kinds of products, more food product must be produced than is required for a single serving and the bread needs to be sliced before use. There is thus the potential for the product to suffer from spoilage before it is fully consumed. Many of these products have poor texture and flavour - in part because of compromises, which must be made when preparing high protein products by traditional mixing and baking methods.

Low-gluten compositions or particulated pre-mixes for making baked goods are for example known from WO 2015/197760 A1 or US 2016/143333 A1.

The bread and muffin mixes described herein are generally suitable for microwave cooking on an 'as and when needed' basis and are thus highly convenient for the user and do not require an extended shelf-life after cooking.

The combination of different protein and fibre sources described in this patent application, have not previously been used in an 'instant' bakery dry mix designed for microwave cooking.

There are microwave-heated recipes available on the internet, relating to 'instant' bread and muffins and so on. However, these are generally not designed to be high in protein and they are not designed to be produced by combining exclusively dry powder ingredients.

There remains a need for a high protein bakery product containing low amounts of sugar and wheat flour (the latter containing high levels of carbohydrate). In particular, there remains a need for such a bakery product which is suitable to be cooked in a microwave oven.

The objectives when selecting the materials for boosting the protein content were to minimise cost, achieve satisfactory texture and flavour, and to achieve an acceptable overall essential amino acid profile, whilst also avoiding high levels of carbohydrate, sugar and saturated fat. Gluten-free versions were also produced.

The food products described herein are generally microwave products, typically eaten on the same day they are cooked. As such, it is possible to include a higher moisture level than a traditional baked equivalent, which requires restricted moisture to achieve a shelf-life of several days. The extra moisture is an added advantage of the microwave products described herein, since it allows a softer crumb to be achieved than is possible with a high protein baked equivalent. Furthermore, the higher moisture content, low carbohydrate and sugar levels, limited heating time and lack of surface browning of the microwave products, are expected to produce significantly less acrylamides than equivalent baked goods. Acrylamides are currently a matter of concern for traditional baked goods.

There is concern that acrylamide levels in conventional baked goods represent a health risk and future legislation limiting acrylamide levels is expected. These microwave products are expected to have significantly lower acrylamide levels than the conventional baked equivalents for the following reasons: the lower cooking temperature, the shorter cooking time, the lower sugar/starch level, the higher moisture content, the absence of browning.

### Statement of Invention

According to a first aspect of the present invention, there is provided a method of forming a slice of bread or bread substitute comprising:
providing a particulate mixture including:
   a. 10 to 25 wt.% flaxseed,
   b. 0 to 10 wt.% chia seed,
wherein the combined amount of a. and b. is 10 to 30 wt.% of the particulate mixture;
   c. 3 to 20 wt.% soluble fibre selected from the group consisting of resistant dextrin, fructooligosaccharide (FOS), galactooligosaccharides (GOS), xylan oligosaccharides (XOS), arabinoxylans (AXOS), beta glucan, gum acacia, pectin, carboxymethyl cellulose (CMC), and hydrolysed guar gum,
   d. gluten, wherein the particulate mixture comprises up to 30 wt.% gluten,
   e. 0 to 15 wt.% pulse protein,
   f. 0 to 9 wt.% of a protein selected from the group consisting of whey protein and hydrolysed wheat protein,
wherein the combined amount of d., e., and f. is at least 13 wt.% of the particulate mixture,
   g. 5 to 30 wt.% egg, (generally in the form of egg powder, preferably whole egg powder),
   h. raising agent;
wherein the particulate mixture includes less than 5 wt.% sugar,
wherein the particulate mixture includes less than 5 wt.% wheat flour typically less than 3 wt.% wheat flour, suitably less than 1 wt.% wheat flour, more suitably substantially no wheat flour;
mixing the particulate mixture with a liquid carrier material;
cooking the resultant combination by microwave.

The method includes cooking the particulate mixture in a microwave oven after it has been mixed with the carrier material (generally water), to provide a high protein equivalent to conventional bakery products such as bread and muffins. The time and inconvenience of preparing a bakery product is minimised, typically to less than three minutes (including mixing time prior to cooking). The resultant products are designed for special nutritional purposes, requiring high protein and low carbohydrate formulations with typically high fibre levels and the potential for vitamin and mineral addition. The usual compromises and deficiencies associated with high protein levels and their implications for traditional (time-consuming) baking methods and processing are avoided. The rapid microwave heating of the products described in this patent application minimises heat degradation of sensitive nutrients such as essential omega-3 fatty acids and since the product is eaten immediately, there is no opportunity for further oxidative processes or spoilage, as can occur over shelf-life a traditional long shelf-life bakery product. Dry powder mixes are much more stable. The protein in the products revealed in this patent application can be readily absorbed and the flaxseed and chia seed contains fat high in essential omega-3 fatty acids and low in saturated fat. Generally, the products of the present invention include all nine essential amino acids in the appropriate relative amounts as described by WHO guidelines.

The food products formed according to the methods of the present invention include a higher proportion of protein than typical high protein bakery products and achieve acceptable texture and flavour, generally using a combination of different proteins, fibre, fat and emulsifier (egg lecithin) and a higher moisture level, in conjunction with microwave cooking. Generally, at least 20% of the calories in the powder or cooked product come from protein and the product therefore generally qualifies under EU legislation (EC1924/2006) as "high protein".

Typically, the food products formed according to the methods of the present invention include at least 12 wt.% protein after cooking (24 wt.% in the particulate mixture) if a "high protein" claim is required, generally at least 20 wt.%, typically at least 21 wt.% protein after cooking (42 wt.% protein in the particulate mixture). The higher calorie contribution from fat compared to protein requires that more than 20wt.% protein is required in these systems in order to achieve a 20% calorie contribution from protein, as defined by EC1924/2006

These products are generally mixed with water in a ratio of about one-part powder to 1 to 1.5 (generally 1.3) parts water. If 40% of the microwave powder mix is generally protein, it follows that approximately 20%% of the final cooked product is generally protein, since this is about 50% moisture after cooking (allowing for water loss during cooking). Traditional, known chocolate muffins generally contain about 5% by weight protein even though the moisture level is much lower than a microwave product, typically around 20% compared to around 50% for the food products of the present invention.

According to European food legislation (EC1924/2006), the food products formed according to the methods of the invention are also generally defined as "high fibre" since the level of fibre in the final product after cooking is typically greater than 6% by weight.

The food products formed according to the methods of the present invention are described in a standard form, which includes generally 15 to 25 wt.% gluten (typically wheat gluten) and a gluten-free form, containing no detectable gluten.

Further disclosed is a particulate mixture that comprises:
a. 7 to 25 wt.% flaxseed,
b. 0 to 10 wt.% chia seed,
   wherein the combined amount of a. and b. is 10 to 30 wt.% of the mixture;
c. 3 to 20 wt.% soluble fibre, selected from the group consisting of resistant dextrin, fructooligosaccharide (FOS), galactooligosaccharides (GOS), xylan oligosaccharides (XOS), arabinoxylans (AXOS), beta glucan, gum acacia, pectin, carboxymethyl cellulose (CMC), and hydrolysed guar gum, generally having a saturation concentration of at least 20g per 100 ml water at a temperature of from 36 to 38 °C and a pH of from 5.5 to 7,
d. gluten, wherein the particulate mixture comprises up to 30 wt.% gluten (generally, 10 to 30 wt.% gluten),
e. 0 to 15 wt.% pulse protein,
f. 0 to 9 wt.% of a protein selected from the group consisting of whey protein and hydrolysed wheat protein,
   wherein the combined amount of d., e., and f. is at least 13 wt.% of the particulate mixture, generally at least 20 wt.%, suitably at least 30 wt.%;
g. 10 to 30 wt.% egg, generally 15 to 25 wt.% egg;
h. raising agent;
wherein the particulate mixture includes 5 wt.% or less sugar,
wherein the mixture includes less than 5 wt.% wheat flour, typically less than 3 wt.% wheat flour, suitably less than 1 wt.% wheat flour, more suitably substantially no wheat flour.

The mixture may comprise 5 wt.% or less chia seed, suitably 1 to 5 wt.% chia seed.

Generally, the mixture includes at least 15 wt.% egg.

According to a further aspect of the present invention, there is provided a method of forming a slice of bread or bread substitute comprising:
providing a particulate mixture including
   a. 10 to 25 wt.% flaxseed,
   b. 0 to 10 wt.% chia seed,
wherein the combined amount of a) and b) is 15 to 40 wt.% of the particulate mixture,
   c) 3 to 20 wt.% soluble fibre selected from the group consisting of dextrin, fructooligosaccharide (FOS), galactooligosaccharides (GOS), xylan oligosaccharides (XOS), arabinoxylans (AXOS), beta glucan, gum acacia, pectin, carboxymethyl cellulose (CMC), and hydrolysed guar gum,
   d) 0 to 30 wt.% pulse protein,
   e) 0 to 30 wt.% of whey protein, generally 0 to 25 wt.% of a protein selected from the group consisting of whey protein, for example whey protein isolate and whey protein concentrate,
wherein the combined amount of d) and e) is at least 13 wt.% of the particulate mixture,
   f) 5 to 30 wt.% egg, typically 5 to 25 wt.% egg, generally 5 to 20 wt.% egg
   g) raising agent;
wherein the particulate mixture includes less than 5 wt.% sugar,
wherein the particulate mixture is gluten-free;
generally wherein the mixture includes no wheat flour;
mixing the particulate mixture with a liquid carrier material;
cooking 50 to 100 g of the resultant combination by microwave.

The mixture may include 5 to 10 wt.% chia seed; generally, 5 to 7 wt.% chia seed. The chia seed is generally milled

The mixture may include 5 to 20 wt.% egg, generally 5 to 15 wt.% egg. The egg is suitably in the form of egg powder, typically whole egg powder.

According to one embodiment, the soluble fibre is in the form of dextrin, suitably resistant dextrin. According to one embodiment the mixture includes 5 to 15 wt.% soluble fibre in the form of dextrin, suitably resistant dextrin.

Generally, the mixture includes no wheat flour.

According to one embodiment, there is provided a method of forming a slice of bread or bread substitute comprising:
providing a particulate mixture including:
   a. 10 to 25 wt.% flaxseed, suitably 15 to 25 wt.%,
   b. 0 to 10 wt.% chia seed, suitably 2 to 10 wt.% chia seed,
wherein the combined amount of a. and b. is 10 to 30 wt.% of the particulate mixture, generally 20 to 30 wt.%;
   c. 3 to 20 wt.% soluble fibre selected from the group consisting of resistant dextrin, fructooligosaccharide (FOS), galactooligosaccharides (GOS), xylan oligosaccharides (XOS), arabinoxylans (AXOS), beta glucan, gum acacia, pectin, carboxymethyl cellulose (CMC), and hydrolysed guar gum,
   d. 10 to 30 wt.% gluten, generally 15 to 25 wt.% gluten,
   e. 0 to 15 wt.% pulse protein, suitably 5 to 10 wt.% pulse protein,
   f. 0 to 9 wt.% of a protein selected from the group consisting of whey protein and hydrolysed wheat protein, suitably 5 to 9 wt.%;
wherein the combined amount of d., e., and f. is at least 13 wt.% of the particulate mixture, generally at least 25 wt.%;
   g. 5 to 30 wt.% egg, suitably 10 to 25 wt.% egg, generally 15 to 20 wt.% egg;
   h. raising agent;
wherein the particulate mixture includes less than 5 wt.% sugar,
wherein the mixture includes less than 5 wt.% wheat flour, typically less than 3 wt.% wheat flour, suitably less than 1 wt.% wheat flour, more suitably substantially no wheat flour; cooking the resultant combination by microwave.

According to a further aspect of the present invention, there is provided a method of forming a slice of bread or bread substitute comprising:
providing a particulate mixture including:
a) 10 to 25 wt.% flaxseed, suitably 15 to 25 wt.%,
b) 0 to 10 wt.% chia seed, suitably 3 to 7 wt.% chia seed,
   wherein the combined amount of a) and b) is 15 to 40 wt.% of the particulate mixture, generally 20 to 30 wt.%;
c) 3 to 20 wt.% soluble fibre consisting of dextrin, fructooligosaccharide (FOS), galactooligosaccharides (GOS), xylan oligosaccharides (XOS), arabinoxylans (AXOS), beta glucan, gum acacia, pectin, carboxymethyl cellulose (CMC), and hydrolysed guar gum,
d) 0 to 30 wt.% pulse protein,
e) 0 to 25 wt.% of a protein selected from the group consisting of whey protein, in particular for example whey protein isolate and whey protein concentrate
   wherein the combined amount of d), and e) is at least 13 wt.% of the particulate mixture, generally at least 15 wt.%;
f) 5 to 20 wt.% egg, generally 5 to 10 wt.% egg;
g) raising agent;
wherein the particulate mixture includes less than 5 wt.% sugar,
wherein the mixture includes no wheat flour,
wherein the mixture includes no detectable gluten.

According to a further aspect of the present invention, there is provided a method of forming a cake comprising:
providing a particulate mixture including:
a. 7 to 25 wt.% flaxseed, suitably 7 to 15 wt.% flaxseed,
b. 0 to 10 wt.% chia seed, suitably 2 to 10 wt.% chia seed,
   wherein the combined amount of a. and b. is 10 to 30 wt.% of the particulate mixture, suitably 10 to 20 wt.%;
c. 3 to 20 wt.% soluble fibre selected from the group consisting of resistant dextrin, FOS, GOS, XOS, AXOS, beta glucan, gum acacia, pectin, CMC, and hydrolysed guar gum, preferably selected from the group consisting of resistant dextrin and FOS;
d. 10 to 30 wt.% gluten, suitably 10 to 20 wt.% gluten;
e. 0 to 15 wt.% pulse protein, suitably 5 to 15 wt.% pulse protein;
f. 0 to 9 wt.% of a protein selected from the group consisting of whey protein and hydrolysed wheat protein, suitably 5 to 9 wt.%;
   wherein the combined amount of d., e., and f. is at least 13 wt.% of the particulate mixture, generally at least 20 wt.%;
g. 5 to 30 wt.% egg; generally 10 to 30 wt.% egg; suitably 15 to 25 wt.% egg;
h. raising agent;
wherein the particulate mixture includes less than 5 wt.% sugar,
wherein the mixture includes less than 5 wt.% wheat flour, typically less than 3 wt.% wheat flour, suitably less than 1 wt.% wheat flour, more suitably substantially no wheat flour mixing the particulate mixture with a liquid carrier material;
cooking by microwave a unit of the resultant combination having an associated weight of 70 to 120 g.

There is also provided a method of forming a gluten-free cake comprising:
providing a particulate mixture including:
   a) 10 to 30 wt.% flaxseed, generally 15 to 25 wt.% flaxseed;
   b) 0 to 10 wt.% chia seed, generally 5 to 10 wt.% chia seed;
wherein the combined amount of a) and b) is 15 to 40 wt.% of the particulate mixture;
   c) 3 to 20 wt.% soluble fibre selected from the group consisting of dextrin, fructooligosaccharide (FOS), galactooligosaccharides (GOS), xylan oligosaccharides (XOS), arabinoxylans (AXOS), beta glucan, gum acacia, pectin, carboxymethyl cellulose (CMC), and hydrolysed guar gum;
   d) 0 to 30 wt.% pulse protein;
   e) 0 to 30 wt.% whey protein, generally 0 to 25 wt.% whey protein, for instance whey protein isolate and whey protein concentrate wherein the combined amount of d), and e) is at least 13 wt.% of the particulate mixture, generally at least 15 wt.%;
   f) 5 to 30 wt.% egg, suitably 5 to 20 wt.% egg, generally 5 to 15 wt.% egg;
   g) raising agent (which does not include a wheat-based carrier);
wherein the particulate mixture includes less than 5 wt.% sugar;
generally wherein the mixture includes no wheat flour;
wherein the mixture includes no detectable gluten
mixing the particulate mixture with a liquid carrier material;
cooking by microwave a unit of the resultant combination having an associated weight of 70 to 120 g.

The mixtures described herein include 5 wt.% or less sugar as an ingredient. However, some of the ingredients included in the mixtures may include sugar and mention may be made of sugar and lactose that may be present in chocolate pieces and lactose present in whey protein isolate. Generally, the mixtures include less than 1 wt.% sugar as a separate ingredient.

The mixture is generally a dry particulate mixture, suitably having a moisture content of 5-15 wt.%, generally 5 to 12 wt.%, typically 8 to 10 wt.%. However, the moisture content of the particulate mixture may vary from batch to batch. Moisture contents of below 10 wt.% are desirable since moisture tends to accelerate oxidation.

Some or all of the particles of the mixture may be spray dried with an oil and/or flavourings (including sweeteners).

According to one embodiment, at least 80 wt.% of the particulate mixture is formed from the specified ingredients, typically at least 85 wt.%, suitably at least 90 wt.%, generally at least 95 wt.%. The particulate mixture may consist essentially of the specified ingredients.

The mixture is generally stable upon storage for several months, typically up to 6-12 months. The physical and chemical stability of the mixture is maintained for 6 months to a year storage at room temperature.

Throughout the Application, where compositions are described as having, including, or comprising specific components, or where processes are described as having, including, or comprising specific process steps, it is contemplated that compositions of the present teachings also consist essentially of, or consist of, the recited components, and that the processes of the present teachings also consist essentially of, or consist of, the recited process steps.

In the Application, where an element or component is said to be included in and/or selected from a list of recited elements or components, it should be understood that the element or component can be any one of the recited elements or components, or the element or component can be selected from a group consisting of two or more of the recited elements or components.

The use of the terms "include," "includes", "including," "have," "has," or "having" should be generally understood as open-ended and non-limiting unless specifically stated otherwise.

### Plant Seed

The particulate mixture provided according to the method of the present invention includes flaxseed, and may also include chia seed.

Flaxseed includes protein and fibre - as well as lignans and omega-3 fatty acids, which have established nutritional benefits. However, these compounds may become degraded with prolonged elevated temperature. The products of the present invention are suitable for microwave cooking. The relatively low heat processing of the products of the present invention helps to retain the beneficial properties of flaxseed and is less likely to develop anti-nutritional by-products found in traditional baked goods, including compounds such as acrylamides. The mixture is proposed in two forms: a standard form including gluten and a gluten-free alternative form. The mixture generally includes flaxseed and chia seed. As well as having beneficial properties due at least in part to the inclusion of lignans and omega-3 fatty acids, flaxseed also includes some anti-nutritional factors such as the inclusion of cyanogenic glycosides, and the inclusion of chia seed allows the amount of flaxseed to be limited. Typically, the amount of flaxseed in the mixture is 25 wt.% or less.

The mixture provided according to the methods described herein includes 0 to 10 wt.% chia seed, and generally this results in a resultant food product including 5 wt.% or less chia seed.

The mixture suitably includes 1 to 10 wt.% chia seed, generally 5 wt.% chia seedor less, typically 1 to 5 wt.% chia seed. Alternatively, the mixture may include 5 to 10 wt.% chia seed, typically 5 to 7 wt.%.

Where the particulate mixture is suitable for use in the method of preparing bread, the mixture includes at least 10 wt.% flaxseed, typically at least 15 wt.% flaxseed, suitably 15 to 25 wt.%, more suitably 15 to 20 wt.% flaxseed. In such embodiments, the combined amount of flaxseed and chia seed is suitably 20 to 30 wt.%, generally 25 to 30 wt.%.

Where the particulate mixture is suitable for use in the method of preparing gluten-containing cake, such as muffin, the mixture includes 7 to 25 wt.% flaxseed, generally 7 to 15wt.% flaxseed, typically 7 to 10 wt.% flaxseed. In such embodiments, the combined amount of flaxseed and chia seed is suitably 10 to 20 wt.%, generally 10 to 15 wt.%.

Where the particulate mixture is suitable for preparing gluten-free cake the mixture includes 10 to 30 wt.% flaxseed, typically 15 wt.% to 30 wt.% flaxseed, suitably 15 to 25 wt.%, more suitably 15 to 20 wt.% flaxseed. In such embodiments, the combined amount of flaxseed and chia seed is suitably 20 to 30 wt.%, generally 25 to 30 wt.%.

The flaxseed and chia seed generally independently have an average particle size of from around 10 to around 60 mesh US sieve size, suitably 15 to 40, typically around 20 to 30 mesh US sieve size. The average particle size of the flaxseed and chia seed may be obtained through milling processes. The flaxseed is generally milled flaxseed and the chia seed is generally milled chia seed.

The average particle size of the plant seed is not critical to functionality, and depends on the type of plant seed, the amount of fat contained therein and how easily the plant seed swells in liquid (suitably water). However, the smaller the average particle size, the greater the associated surface area and the greater the risk of oxidation of the fatty acids contained therein during storage. In addition, it is likely that the smaller the average particle size, the higher the temperature during milling processes and the higher the temperature, the greater the risk of oxidation of the fatty acids.

The mixture for use in the methods of the present invention generally includes a combined amount of flaxseed and chia seed of 10 to 30 wt.%; typically, 10 to 20 wt.%, suitably 10 to 15 wt.%.

Alternatively, the mixture for use in the methods of the present invention may include a combined amount of flaxseed and chia seed of 20 to 30 wt.%, generally 25 to 30 wt.%.

The mixture may include additional plant seed. The additional plant seed generally includes relatively high levels of protein and and/relatively high levels of fibre.

### The addition of fibre

The mixtures for use in the methods of the present invention include 3 to 20 wt.% soluble fibre selected from the group consisting of resistant dextrin, fructooligosaccharide (FOS), galactooligosaccharides (GOS), xylan oligosaccharides (XOS), arabinoxylans (AXOS), beta glucan, gum acacia, pectin, carboxymethyl cellulose (CMC), and hydrolysed guar gum.

Ordinarily, dietary fibres are classified into two categories depending on their biological and physicochemical properties. These categories are insoluble fibre and soluble fibre.

Insoluble fibre, such as cellulose, maize fibre or insoluble soy fibre, have essentially a mechanical role in the gastrointestinal tract. They are generally only very slightly fermented by the intestinal flora and contribute to faecal bulk and reducing the duration of the intestinal transit.

Soluble fibre, such as pectin, inulin, resistent dextrin or resistant starch, is a very good fermentation substrate for the intestinal flora. The result of this fermentation is a release of fatty acids, in particular short-chain fatty acids in the colon.

As referred to herein, the term "soluble fibre" means those dietary fibre types, which are characterised as soluble using the method of Prosky et al; 1988; J. Assoc. Off. Anal. Chem, 70, 5, 1017. This is the official method of the Association of Official Analytical Chemists.

As used herein, the term "soluble fibre" pertains to fibre which are able to undergo fermentation in the colon to produce short chain fatty acids (SCFA).

The fibre is generally water soluble at normal human body temperature (36 to 38 °C), and is generally water soluble under the conditions present in the stomach and small and large intestines of a human, preferably having the specified water solubility under the conditions present in the large intestine. Generally the fibre has the specified solubility at a temperature of from 36 to 38 °C and a pH of from 5 to 8, typically 5.5 to 7, suitably 6 to 8,

The fibre generally has the required water solubility levels before and after ingestion.

The fibre for use in the composition of the present invention may have a saturation concentration of at least 20g per 100 ml water, generally at least 30g per 100 ml water, suitably at least 50g per 100 ml water, typically at least 100g per 100 ml water, preferably at least 150g per 100 ml water, more preferably at least 200g per 100 ml water at normal body temperature, and at a pH of from 6 to 8. The saturation concentration is generally measured at atmospheric pressure.

In the case of soluble (resistant) dextrin the fibre suitably has a saturation concentration of around 200 to 220g per 100 ml water or about 70% by weight at normal body temperature. In contrast, FOS has a saturation concentration of around 30 to 50g per 100 ml water. Soluble, resistant dextrin (also known as soluble corn fibre or soluble wheat fibre, depending on the source of starch) can be dissolved at up to 70% by weight in water (70g dextrin in 30ml water) and FOS up to about 30% by weight in water (30g FOS in 70ml water)..

According to one embodiment, the fibre may be in the form of a sugar based polymer, in particular those having a saturation concentration of at least 20g per 100 ml water at normal body temperature under the conditions present in the human intestine. Suitably, the fibre is resistant to human digestive enzymes, so that the fibre may pass through the stomach and small intestine of a human or animal relatively intact following ingestion. Typically, the fibre may be broken down by fermentation involving gut bacteria in the large intestine of a human or animal.

As used herein, the term "oligosaccharide" refers to saccharide consisting of at least two, up to 50, generally up to 30, suitably up to 25 glycosidically linked monosaccharide units, i.e. having a degree of polymerisation (DP) of 2 to 50 (generally 2 to 25) depending on the type of oligosaccharide.

The water soluble fibre disclosed herein may be in the form of a water soluble carbohydrate, suitably an oligosaccharide such as resistant dextrin, in particular formed through the treatment of a water soluble starch or alternatively formed via extraction and further treatment of other plant storage polymers ; suitably selected from the group consisting of, fructooligosaccharide (FOS), galactooligosaccharides (GOS), xylan oligosaccharides (XOS), arabinoxylans (AXOS), beta glucan (another glucose-based fibre - extracted from oats), gum acacia, and other hydrocolloids such as pectin or carboxymethyl cellulose (CMC), including hydrolysed hydrocolloids for example hydrolysed guar gum.

Non-exhaustive examples of suitable fibre for use in the composition of the present invention include fructose-based polymers such as inulin and inulin-derived fructo-oligosaccharide (FOS), lactose-based polymers such as galacto-oligosaccharide (GOS), more complex soluble, sugar-based polymers such as gum acacia (a tree exudate), hydrocolloids such as xanthan gum, guar gum, pectin, psyllium etc., synthetic glucose/sorbitol polymers known as polydextrose and resistant oligosaccharides including soluble resistant dextrin or combinations of two or more of these.

Generally, the fibre is resistant dextrin or FOS.

Resistant soluble dextrin fibre (also known as resistant dextrin) is generally preferred to some other forms of soluble fibre (such as inulin and FOS) since it is better-tolerated by the human gut - requiring approximately double the amount to produce any noticeable digestive effects (such as bloating, gas or diarrhoea).

According to reference herein, maltodextrin and dextrin are small, glucose polymers ('oligosaccharides') containing up to about 100 glucose units, suitably up to about 30 glucose units, generally up to about 20 glucose units. The oligosaccharides may have a straight chain or a branched chain structure. These oligosaccharides generally have a water solubility detailed above. In commercial form, maltodextrins also contain low levels of trioses, di-saccharides (i.e. maltose), tri-saccharides, tetra-saccharides and glucose. Precise definitions vary and a material described as maltodextrin in Europe for example might be described as modified starch in the United States. Maltodextrin and dextrin are produced from starch, which is found in the storage granules of maize, potato, wheat, rice, tapioca etc. Starch consists of much larger glucose-based polymers containing typically between 100 and 10,000 glucose units. It swells and absorbs water when it is heated (a process called gelatinization) although it is not truly soluble. There are two basic types of starch - amylose and amylopectin. Amylose consists of long chains of glucose joined by α(1-4) glycosidic links between carbons at positions 1 and 4 of the ring structures on adjacent glucose molecules. Amylopectin is similar although it has a more branched structure as a result of α(1-6) glycosidic links between carbons 1 and 6 of two glucose molecules at branch points; from which side chains joined by the usual α(1-4) links are attached. Manufacturers have developed processing techniques involving heating, acid treatment and enzymes to control the properties of the maltodextrins and dextrins made from starch. One challenge is to produce materials with low flavour, odour and colour; suitable for food use.

There is evidence that more highly branched maltodextrin and dextrin can be slower to be broken down by digestive enzymes than un-branched dextrin and maltodextrin. However, such materials are still broken down quite rapidly when they reach the small intestine and hence have a glycemic index similar to glucose. However, there are resistant forms of dextrin and maltodextrin, which are not broken down until they reach the large intestine, where they are fermented by gut bacteria to produce short chain fatty acids amongst other things (including gases such as hydrogen and methane). Such resistant dextrin and maltodextrin therefore qualifies as soluble fibre, which has well known positive (prebiotic) nutritional benefits. The digestibility of glucose polymers depends not only on the degree of branching but also on the nature of the bond between adjacent glucose molecules. In contrast to soluble starches, dextrins and maltodextrin - indigestible (and insoluble) cellulose cannot be readily broken down by human gut bacteria and it is a polymer of glucose with β(1-4) links between carbons 1 and 4, rather than α (1-4) glycosidic links as in starch.

Fructooligosaccharides (also called oligofructose) (FOS) are nondigestible oligosaccharides that are members of the inulin subclass of fructans. They occur commonly in nature. Fructo-oligosaccharides are soluble forms of fibre which are in the form of glucose-fructose (GFₙ) or fructose (Fₙ) oligomers including for example 1-kestose(GF₂), nystose(GF₃), inulobiose (F₂)inulotriose (F₃), inulotetraose (F₄) and1F-fructofuranosyl nystose(GF₄), in which fructosyl units(F) are bound at the [beta]-2,1 position of sucrose(GF) respectively. Generally, amounts of sucrose, fructose and glucose may also be present. The fructo-oligosaccharides may be obtained by hydrolysing chicory inulin or by enzymatic methods/fermentation using sucrose as a base material.. In the latter case, short chain FOS are composed of one to three fructose molecules linked to one molecule of sucrose: their polymerisation degree (DP) is not higher than 6, and they can be synthesised from sucrose through the use of transfructosylating enzymes. Treatment of sucrose with these transfructosylating enzymes results in a mixture of FOS containing 2, 3 or 4 fructose units, such as 1-kestose, nystose and fructosyl-nystose.

As used herein the term "FOS" encompass FOS and short chain FOS. According to the invention, FOS may comprise between 2 and 20 saccharide units, preferably between 2 to 15 saccharide units, more preferably between 2 to 7 saccharide units and even more preferably between 2 to 6 saccharide units. FOS may contain about 95% by weight disaccharides to heptasaccharides, based on the total weight of FOS.

Galacto-oligosaccharides (GOS) may comprise di, tri, tetra, penta and hexasaccharides, mainly consisting of galactose as a sugar component, and are formed by the action of beta-galactosidase on lactose. GOS may comprise between 2 and 15 saccharide units, preferably between 2 to 10 saccharide units, more preferably between 2 to 7 saccharide units and even more preferably between 2 to 6 saccharide units. GOS may contain about 0 to about 45% of weight disaccharides, preferably about 10 to about 40% of weight disaccharides, more preferably about 20 to about 35% of weight disaccharides, and even more preferably about 33% of weight disaccharides, based of the total weight of GOS. GOS may contain about 0 to about 50% of weight trisaccharides, preferably about 10 to about 45% of weight trisaccharides, more preferably about 20 to about 40% of weight trisaccharides, and even more preferably about 39% of weight trisaccharides, based on the total weight of GOS. GOS may contain about 0 to about 50% of weight tetrasaccharides, preferably about 5 to about 45% of weight tetrasaccharides, more preferably about 10 to about 40% of weight tetrasaccharides, and even more preferably about 18% of weight tetrasaccharides, based of the total weight of GOS. GOS may contain about 0 to about 30% of weight pentasaccharides, preferably about 1 to about 25% of weight pentasaccharides, more preferably about 2 to about 10% of weight pentasaccharides, and even more preferably about 7% of weight pentasaccharides, based of the total weight of GOS.

The fibre used in the formulation of the present invention generally has a water solubility as detailed above (referred to herein as "soluble fibre"). The fibre used in the formulations described herein is generally resistant to the hydrolytic activity of human digestive enzymes, in particular those present in the mouth, stomach and small intestine. Such fibre may be referred to herein as being "resistant". The meaning and scope of the terms "resistant oligosaccharides" "resistant dextin" and "resistant starch" are commonly used in the art and would be apparent to the skilled man.

According to one embodiment, the formulation of the present invention comprises resistant oligosaccharides, in particular resistant dextrin and/or resistant starch.

Resistant dextrins (and maltodextrins) are produced from starch by the use of enzymes, heating and controlled pH, to produce glucose-based oligosaccharides, which are largely resistant to human digestive enzymes present in the stomach and small intestine. They may be subsequently fermented and broken down by bacteria in the human large intestine. Resistant dextrin (and maltodextrin) therefore qualifies as soluble fibre. Such fermentable soluble fibre is associated with various beneficial nutritional effects. The Handbook of Dietary Fibre teaches that " the anomeric carbon atom (C1 or C2) of the monosaccharide units of some dietary oligosaccharides has a configuration that makes their osidic bonds resistant to the hydrolytic activity of some human digestive enzymes" (see M. Roberfoid & JL Slavin, Handbook of Dietary Fibre, 2001, Marcel Dekker Ed S.S. Cho., M.L. Dreher, p126). The GRAS notification (No436 July 2912) for the resistant dextrin used in these products (Nutriose 6 type) describes an increase in C(1-2), C(1-4) and C1-6 linkages in resistant dextrin (85% soluble fibre) compared to standard dextrin (20-45% soluble fibre). The degree of polymerisation for Nutriose 6 is given as 12-25.

There are five types of resistant starch, which can be described as fermentable fibre, since they are not broken down after ingestion until they are fermented by bacteria in the colon. Resistant starch is a normal part of the human diet. Amylose and amylopectin forms of starch are normally broken down by human digestive enzymes, although α- amylose molecules can line up in the starch granules after gelatinization and are more slowly broken down by human amylases than amylopectin (which has a less compact structure). However, if amylose starch is cooled for a long period after cooking and gelatinizing, it can cross-link between adjacent amylose molecules (a process involving hydrogen bonding and known as retrogradation). This renders the starch substantially fully resistant to human digestive enzymes and it therefore qualifies as a type of fibre classified as resistant starch (type 3). This is not broken down until it is fermented by gut bacteria in the large intestine. This type of material can be separated out and dried to a powder for use as an added source of fibre in food products. Once this type of powdered, resistant starch has been re-suspended in water it no longer has significant water-binding or thickening effects and so can be included at high levels. Novelose 330 from Ingredion is an example of this type of resistant starch.

There are other ways of producing resistant starch, for example by chemical cross-linking (type four resistant starch) although this type of material is generally not suitable for the 'clean label' products described here. Types one and two resistant starch are found in starch-containing, fresh vegetables and fruit. Type two is present in resistant starch granules in green bananas and uncooked potatoes. The intact granules are not digested prior to being acted on by gut bacteria. This material is available in powder form.

Generally, the fibre of the formulations of the present invention is soluble fibre selected from the group consisting of resistant starch, FOS and resistant dextrin . The selected type and level of fibre is important in the formulations of the present invention. Some types of insoluble fibre can introduce a tough or grainy texture with poor flavour. The fibre in flaxseed and chia seed does not detract from the flavour and texture of the systems. In addition, we have found that soluble fibre, in particular soluble fibre having a saturation concentration of of at least 20g per 100 ml water, generally at least 30g per 100 ml water at normal body temperature, (for example FOS or resistant dextrin) tends to contribute positively to the overall texture of the product, and may play a part in inhibiting gluten structure. The mixture of the present invention may include 5 to 15 wt.% starch (such as resistant starch), dextrin, such as resistant dextrin, (derived from wheat or maize starch) or oligosaccharide such as FOS. Suitably the resistant dextrin is that sold under the registered Trade Mark Nutriose® - both wheat-based (Nutriose FB06) and gluten-free, maize-based (Nutriose FM06) versions being available.
Resistant dextrin is one of the most well tolerated forms of soluble fibre if laxative effects or flatulence and bloating are to be avoided - with a non detectable effect level of around 45g/day whilst considerably less than this amount is present in the microwave bread and muffin formulations exemplified herein (around 5g per 100g of freshly microwaved product).

A small amount of soluble fibre in the form of psyllium can contribute to the mix viscosity when needed. The level of psyllium is selected to avoid the possibility of any laxative effect. Generally, the mixture includes 5 wt.% psyllium or less, typically 4 wt.% or less, suitably 2 wt.% or less. Alternatively, hydrocolloids such as xanthan gum, guar gum, locust bean gum, carrageenan, hydroxypropyle methyl cellulose (HPMC), methyl cellulose (MC), sodium carboxymethyl cellulose (CMC) and sodium alginate; can provide viscosity and soluble fibre although their high viscosity and cost may limit their use.

### Gluten

According to one embodiment, the mixture provided according to the methods of the present invention may include gluten, typically 10 to 30 wt.% gluten, generally 10 to 20 wt.% gluten, suitably 15 to 20 wt.% gluten although gluten-free variants are an option. Gluten is an inexpensive protein source with neutral flavour and a reasonable amino acid profile. It is high in most essential amino acids including sulphur containing amino acids (SCAA; methionine and cysteine), although a little low in lysine. Gluten is also used in these products to produce mix viscosity, without resorting to the use of traditional wheat flour, which would introduce high levels of carbohydrate and anti-nutritional factors, such as phytic acid. The inclusion of gluten in traditional baked goods improves the elasticity and rise of the mixture following addition of liquid, and improves the crumb and chewiness of the resultant food product. However, by including excessive levels of gluten in high protein bakery products, the textural properties of the bakery product (for example high protein bread, cake or muffin) tend to be negatively affected by the development of excess viscosity during mixing. In addition, shrinkage during cooking and a relatively tough texture after cooking and cooling may be exhibited.

The standard mixture of the present invention can include more gluten than conventional high protein bakery products.

This may be because of the limited amount of mechanical mixing involved (hand-stirring) or a result of the other ingredients in the mix preventing the gluten from developing the structure that would be expected in an equivalent baked product - or indeed a combination of these effects. Whilst the applicant does not wish to be bound by theory, it is possible that in the microwave products of the present invention including high levels of gluten, a two-phase system is being produced as a result of thermodynamic incompatibility between the egg and gluten proteins or possibly between the gluten and another ingredient such as the whey protein and/or the resistant dextrin. The continuous egg protein phase therefore would form the structure after cooking whilst the discontinuous gluten phase is not able to contribute significantly to the overall structure of the cooked product (although gluten does contribute to the viscosity of the mix prior to cooking). Emulsifier (egg lecithin) will also beneficially modify texture as it is known to do in traditional baked goods. We have found that contrary to expectations, gluten may be omitted from the microwaveable food products of the present invention without loss in structure after cooking. Such gluten-free (GF) formulations should include an alternative protein source (whey protein works well). The addition of a thickener may also be beneficial to replace the thickening effects of gluten prior to cooking.

The bakery products produced according to the methods of the present invention are cooked in a microwave (generally 3 minutes or less in total). In addition, the particulate mixture is combined with a liquid carrier material, (suitably consisting or comprising one or more of water, oil, a dairy liquid such as milk, cream, or yoghurt, or comprising one or more of creme fraiche and soft cheese) or a non-dairy equivalent prior to heating, with less mixing than for the manufacture of conventional baked products. The reduction in mixing time and/or phase separation effects - are thought to reduce the development of gluten structure, when gluten is present.

The gluten for inclusion in the mixture is generally vital wheat gluten. According to one embodiment, some or all of the gluten may be provided in the form of hydrolysed gluten. This tends to reduce mix viscosity and produce a softer crumb. Generally, 20 wt.% or less of the gluten is in the form of hydrolysed gluten, suitably, 10 wt.% or less is the form of hydrolysed gluten which avoids or mitigates the issue of excess viscosity prior to baking and tends to produce a more tender crumb after baking. The majority of the gluten used in the mixture of the present invention is typically in the form of vital gluten.

Vital gluten may be formed by hydrating wheat flour to activate the gluten therein, processing the hydrated wheat flour to remove substantially everything but the gluten, drying the resultant product and grinding the dried product into a powder.

According to one embodiment, the gluten may be in the form of wheat protein isolate.

According to one embodiment, where the food product to be prepared is bread, the amount of gluten to be added may be greater than where the food product to be prepared is cake. This may be due to the presence of flavourings such as cocoa powder in cake formulations meaning that there may be a little less capacity for protein. However, the bread and cake formulations referred to herein are sufficiently flexible to allow similar levels of protein in either product.

Typically, where the food product of interest is bread the particulate mixture may include 15 to 25 wt.% gluten, suitably 20 to 25 wt.% gluten. Typically, where the food product of interest is cake, the mixture may include 10 to 20 wt.% gluten, suitably 15 to 20 wt.% gluten.

The mixture provided according to the methods of the present invention includes 5 wt.% or less wheat flour, suitably 3 wt.% or less wheat flour. According to one embodiment, the mixture described herein does not include wheat flour.

Many so-called "high protein products" contain a proportion of wheat flour, which contains a low level of gluten as well as carbohydrate (starch) and an anti-nutritional factor (phytic acid). By avoiding the use of wheat flour, the amount of phytic acid in the resultant product is minimised and the introduction of carbohydrate, present as starch in wheat flour, is also minimised. The absence of wheat flour is not only desirable to achieve the nutritional targets of the described products, but also it minimises the retrogradation process (starch cross-linking), which can produce a tough texture after baking in products containing higher levels of starches (in particular amylose). In contrast, the food product described herein is high protein (typically at least 12 wt.%, generally at least 15 wt.%, suitably at least 20 wt.%, more suitably at least 21wt.% protein after cooking), but does not generally include any wheat flour.

### Additional protein

Typically, the mixture provided according to the methods of the present invention includes an additional source of protein, suitably in the form of a pulse protein. Gluten is high in sulphur containing amino acids, but low in lysine. The inclusion of pulse protein is beneficial as such proteins are generally high in lysine and low in SCAA. Suitable pulse proteins include those derived from pea, faba and lentil.

These therefore work well in combination with gluten (high in SCAA, low in lysine) and hydrolysed gluten, egg and chia seed and flaxseed - to further increase the protein content of these products and boost the lysine levels to achieve the recommended WHO guidelines for essential amino acids (WHO recommended profile from WHO Technical Report Series, 2008, No 935, p150, Table 23). However, introducing too much pulse protein can result in a poor texture and poor flavour.

Suitably the mixture of the present invention includes less than 15 wt.% pulse protein, typically 10 to 15 wt.% pulse protein.

The mixture may include 0 to 15 wt.% pulse protein, typically 5 to 15 wt.%

The pulse protein may include proteins from different pulse sources. Some or all of the pulse protein may be hydrolysed. Typically, 20 % or less of the pulse protein used is in the form of hydrolysed pulse protein, suitably 10 % or less.

The pulse protein is generally selected from the group consisting of lentil, pea and faba protein, suitably lentil and pea protein. Lentil protein often has less flavour than other pulse proteins and can therefore be a desirable pulse protein type, although it is expensive. 30 wt.% or more of the pulse protein may be lentil protein, generally 40 wt.% or more. 30 wt.% or more of the pulse protein may be pea protein, generally 40 wt.% or more, suitably 50 wt.% or more.

According to one embodiment, the mixture may include low levels of whey protein, in the form of whey protein isolate (WPI) or whey protein concentrate (WPC) which possess an excellent profile of essential amino acids WPI is preferred since it has a higher protein content and lower carbohydrate content than WPC.. Generally the mixture includes 7 wt.% or less whey protein, typically 5 wt.% or less, suitably 3 to 5 wt.%, more suitably around 4 wt.%. The inclusion of whey protein is particularly suitable where the mixture is intended for the formation of bread, such as a slice of bread, and/or is particularly suitable where the mixture is gluten-free. The inclusion of low levels of whey protein reduces the likelihood of the food product adhering to the surface upon which it is cooked, in particular the plate or mug used during microwave cooking.

In examples of gluten-free (GF) versions of the microwaveable products formed according to the methods of the present invention, whey protein may be used to replace some or most of the protein previously provided by the gluten. Whey Protein Isolate (WPI) is preferred to minimise the amount of added carbohydrate and up to 25% of the powder mix by weight may be WPI although other proteins could be considered (including other less expensive proteins). The fact that the WPI gels on heating is however an advantage since we have found it helps boost the volume of the products after heating and cooling and it is presumably compatible with the egg protein gel. As mentioned previously, a thickener, in particular a thickener soluble in the carrier to be used at room temperature may also be beneficial in GF variants. This could be a cold swell (pregelatinised) starch, beta glucan, a hydrocolloid such as xanthan gum, guar gum, pectin etc., a physically modified, for instance heat treated, GF flour or recognised GF flours such as almond flour or mixtures of rice, tapioca, maize and buckwheat flours etc. or combinations thereof.

The mixture provided according to the methods of the present invention includes less than 5 wt.% wheat flour, typically less than 3 wt.% flour, suitably less than 1 wt.% wheat flour, more suitably substantially no wheat flour. However, in some embodiments, the mixture may include hydrolysed wheat protein. The mixture generally includes 8 wt.% or less hydrolysed wheat protein, typically 5 wt.% or less, suitably 3 to 5 wt.% hydrolysed wheat protein.

The combined amount of gluten (if present), pulse protein (if present), whey protein (if present) and hydrolysed wheat protein (if present) in the mixture is at least 13 wt.%, generally at least 20 wt.%, suitably at least 30 wt.%. According to one embodiment, the combined amount of gluten (if present), pulse protein (if present), whey protein (if present) and hydrolysed wheat protein (if present) in the mixture is 30 to 40 wt.%.

### Egg

The use of high levels of egg (egg albumin powder or preferably egg albumin with lecithin in whole egg powder) controls the texture of the products disclosed herein and inhibits the development of gluten crumb structure. Although the applicant does not wish to be bound by theory, this may be as a result of thermodynamic incompatibility, excluding gluten from the continuous phase. Either egg and/or WPI and/or resistant dextrin (or combinations thereof) may contribute to the postulated thermodynamic incompatibility. The egg albumin in the whole egg may promote or develop the high quality crumb structure in the food products disclosed herein. The lecithin and fat in the egg may be associated with modifications in the texture of the albumin gel and in modifications in the texture of other elements in the mix such as starches. This may prevent the retrogradation of starch on cooling, which could be associated with a toughening in the texture of the resultant food product. Egg protein also makes an important contribution to the protein content and amino acid profile. However, egg is expensive and too much egg can produce unsatisfactory texture and flavour.

The mixture of the present invention includes 5 to 30 wt.% egg, generally the mixture includes 5 to 20 wt.% egg. Generally, the egg is in the form of whole egg powder.

Where the food product to be prepared is gluten-containing bread, the amount of egg to be added is generally less than where the food product to be prepared is gluten-containing cake. However, the bread and cake formulations referred to herein are sufficiently flexible to allow similar levels of egg in either product.

Typically, where the food product of interest is gluten-containing bread the mixture may include 15 to 25 wt.% egg, suitably 15 to 20 wt.% egg. Typically, where the food product of interest is gluten-containing cake, the mixture may include 25 to 35 wt.% egg, suitably 25 to 30 wt.% egg.

Where the food product to be prepared is gluten-free, the mixture generally includes 5 to 15 wt.% egg, typically 7 to 12 wt.% egg.

The egg for use in the mixture may be in the form of whole egg, whole egg powder, egg white powder and/or egg yolk although preferably, whole egg powder.

In general, egg white may be considered to give structure to the resultant product, but on its own may give a dry texture. Egg yolk generally helps to produce a softer, moister resultant product but does not provide sufficient texture. Therefore, there is a preference for whole egg or a combination of egg white powder with egg yolk powder to be used in the products described herein.

### Raising agent

Any type of suitable raising agent can be used to produce the necessary cellular sponge texture during cooking through microwave heating. Mention may be made of sodium bicarbonate, potassium bicarbonate and baking powder; suitably potassium bicarbonate. Combinations of bicarbonate (preferably potassium bicarbonate to reduce sodium levels) and acid phosphate are preferred to provide the best texture and flavour. This pH-balanced formulation avoids the high pH and possible off-flavours and discolouration associated with the use of bicarbonate on its own.

The mixture generally includes less than 5 wt.% raising agent, suitably 2 to 4 wt.% raising agent.

### Fat

Including relatively high fat levels, assists in reducing the carbohydrate levels and also helps produce a more tender crumb structure. Flaxseed and whole egg or egg yolk contain high fat levels. However, the mixture of the present invention may include additional ingredients including relatively high fat levels. In particular, such ingredients may include spray dried fat powder. This tends to produce a tenderer, 'moist' crumb after cooking. Ingredients have been selected to reduce the proportion of saturated fat.

Additionally, or alternatively, the mixture may be combined with high fat ingredients shortly prior to cooking. In particular, the mixture may be combined with oil and water prior to cooking. If required, additional liquid fat in the form of high omega three oils such as rapeseed oil and walnut oil can be added to the particulate mixture and water mix immediately prior to microwave heating.

According to a further embodiment, the mixture is combined with a liquid carrier material such as a dairy product or non-dairy equivalent. Mention may be made of milk, cream (including single cream, double cream and whipping cream), and yoghurt as well as carrier materials comprising creme fraiche, and/or soft cheese. Mention may also be made of dairy free equivalents including those formed or derived from soy, rice and nuts such as almonds. According to one embodiment, the carrier material may include or consist of fruit or nut pastes according to individual tastes.

### Sugar levels and high intensity sweetener

The mixtures described herein includes less than 5 wt.% sugar as an ingredient. However, some of the ingredients included in the mixture may include sugar and mention may be made of sugar and lactose in chocolate pieces and lactose which may be present in whey protein isolate and whey protein concentrate. Generally, the mixtures include less than 1 wt.% sugar as a separate ingredient.

Generally, the total amount of sugar included in the mixture is 5 wt.% or less. Such low sugar levels are a common requirement for Atkins-style products and foods for diabetics. The mixture may include artificial sweeteners and flavourings, generally at levels of 0.5 to 5 wt.%, typically 1 to 2 wt.%. The mixture may also include cocoa at 5 to 15 wt.%, generally 8 to 10 wt.%.

The level of sugar can be controlled depending on the chosen market sector. Where the mixture is intended to form cake, sweeteners, flavourings, cocoa and/or chocolate pieces may be added. In the muffin systems, high intensity sweeteners are typically used to produce sweetness when needed. A combination of sucralose with acesulfame K provides a good flavour profile, with rapid onset of sweetness, which then lingers in a similar way to sucrose.

In addition, the total carbohydrate level (excluding fibre) in the mixture is kept as low as possible, since starch and other readily absorbed sugar-based polymers are rapidly broken down to sugars after ingestion.

The mixture may include added vitamins and/or minerals as required.

### Thickening agents

The mixture may include thickening agents such as one or more of psyllium, cold swell starch and gums (hydrocolloids) such as xanthan gum, guar gum, locust bean gum, carrageenan, hydroxypropyl methyl cellulose (HPMC), methyl cellulose (MC), sodium carboxymethyl cellulose (CMC) and sodium alginate. Generally thickening agents are present at levels of from 0 to 10 wt.%, suitably 0.05 to 8 wt.%. Where the thickening agents are gums such as guar gum and xanthan, the mixture generally includes 0.05 to 0.6 wt.% thickening agent, typically 0.05 to 0.5 wt.%. Where the thickening agents are in the form of psyllium, the mixture generally includes 5 to 10 wt.% thickening agent.

According to one embodiment, where the mixture is suitable for the formation of a cake, such as a muffin, the mixture includes thickening agents at from 0.1 to 8 wt.%. The mixture may include one or more of psyllium, guar gum and xanthan, suitably all of psyllium, guar gum and xanthan. Where the thickening agents are gums such as guar gum and xanthan, the mixture generally includes 0.05 to 0.4 wt.% thickening agent, typically 0.05 to 0.2 wt.%.

According to one embodiment, where the mixture is suitable for the formation of bread, the mixture includes less than 5 wt.% thickening agents such as psyllium, guar gum and xanthan gum.

### Food Product Formed

The methods of the present invention form a food product prepared from a combination comprising or consisting essentially of the particulate mixture and a liquid carrier material, generally comprising or consisting of water.

The combination may include from 20 to 80 wt.% carrier material, and from 20 to 80 wt.% particulate mixture. Typically, the combination includes 50 to 75 wt.% carrier material, and 25 to 50 wt.% particulate mixture.

The combination generally includes from 40 to 60 wt.% carrier material, and from 40 to 60 wt.% particulate mixture; typically, approximately equal amounts of mixture by weight as of carrier material.

According to one embodiment, the combination may include 55-60% carrier material and 40-45% mixture i.e. more carrier material than particulate mixture.

The carrier material is a liquid. The carrier material may be one or more of the group consisting of water; oil (typically high omega three oils such as rapeseed oil and walnut oil); dairy product such as milk, cream (including single cream, double cream and whipping cream), and yoghurt, and/or may comprise creme fraiche, and/or soft cheese; non-dairy equivalent including those formed or derived from soy, rice and nuts such as almonds.

According to one embodiment, the liquid carrier material is water. Alternatively, or additionally the liquid carrier material may comprise milk or cream.

The combination may include oil, typically 10 wt.% or less of the combination is oil. Following cooking, the food product typically includes at least 12 wt.% protein, suitably at least 15 wt.% protein, generally at least 21 wt.% protein.

Following cooking, the food product generally includes at least 40 wt.% water/moisture.

The food product formed according to the methods of the present invention is in the form of a cake, for instance a muffin, waffle, crumpet, pancake, cupcake or scone (sweet or savoury) or a slice of bread or bread substitute.

The combination may include from 20 to 80 wt.% liquid carrier material, and from 20 to 80 wt.% particulate mixture. Typically, the combination includes 50 to 75 wt.% liquid carrier material, and 25 to 50 wt.% particulate mixture.

The combination generally includes from 40 to 60 wt.% liquid carrier material, and from 40 to 60 wt.% particulate mixture; typically, approximately equal amounts of mixture by weight as of liquid carrier material.

According to one embodiment, the combination may include 55-60% carrier material and 40-45% mixture i.e. more liquid carrier material than particulate mixture.

Generally, the combination includes approximately equal amounts of mixture by weight as of water. Suitably the combination includes 40 to 50 wt.% mixture and 40 to 50 wt.% liquid carrier material.

According to one embodiment, the particulate mixture may be combined with liquid carrier material in a ratio of 1:1 to 1.5. The combination may be formed from particulate mixture/cream (in particular double cream)/water in a ratio of 1:1:0.5 by weight.

The liquid carrier material typically comprises or consists of one or more of water, oil, milk, cream, yoghurt, a dairy-free equivalent, suitably derived from soy, rice or nuts such as almonds. Mention may also be made of liquid carrier materials comprising one or more of creme fraiche, soft cheese fresh fruit, dried fruit pastes and nut pastes.

The combination may include 10 to 20 wt.% oil.

Generally, the mix viscosity is controlled prior to cooking, in order to achieve the required product properties. In the case of the microwave bread, a reasonably high mix viscosity is required prior to cooking so that the bread mix can be easily spread over the surface of a microwavable plate i, to form a relatively stable, thin, circular layer, prior to cooking, which will be converted to a slice of bread-like material in the microwave oven. Typically, two slices of 'bread' can be produced consecutively with a total cooking time of about 140 seconds (2x70 seconds on full power). Alternatively, the bread can be mixed and cooked in a suitably-shaped microwavable bowl and viscosity is less critical.

In early work with chocolate muffins and bread, the viscosity of both was very high and allowed the dough to be formed into a free-standing dough ball prior to microwave cooking on a plate to produce a 'muffin-like' shape after cooking. In later versions, a lower viscosity was required - especially when cooking in a receptacle with walls (such as a ceramic mug), where a lower viscosity was preferable.

The method may include providing the combination in a receptacle with walls which extend at least to the height of the desired food product after cooking. Generally, the walls of the receptacle extend at least a distance equivalent to the maximum distance between the two side of the base of the receptacle, generally the diameter of the base. The walls of the receptacle may reduce the risk of the food product collapsing during or after cooking. Suitable receptacles include a cup, a mug or a high sided bowl. In such embodiments, the method generally forms a cake, in particular, a cup cake or muffin.

The viscosity of the combination of particulate mixture and carrier material is generally sufficiently low to allow the combination to take the form of the container into which it is housed. The relatively higher viscosity of the bread mix also allows the combination to be spread out on a plate to form a stable layer of for instance 0.2-2.0 cm high (generally 0.5-1.0 cm high). Generally, the combination may be spread over a plate (for instance a microwave plate) prior to cooking. In such embodiments, the method generally forms a slice of bread.

The viscosity of the combination may be controlled through the inclusion or absence of thickening agents in the mixture, and/or by controlling the amount of liquid added to the mixture to form the combination.

A cake mix may be designed to be hand-mixed and cooked in a microwaveable container such as a ceramic mug. The viscosity of the combination of particulate mixture and water for the chocolate muffin mix is controlled to by choice of thickener levels and types to prevent the mix overflowing when cooked in a mug although the size of mug is obviously a factor controlling the size and shape of the cake or muffin. The bread generally has a higher viscosity, which assists spreading into a thin, stable layer prior to cooking. The viscosity of the bread mix however should not be too high since this can inhibit the expansion and aeration during cooking as the raising agent is released. This also contributes to a softer texture for the bread. Since the muffin may be designed to have a unit weight of about 70 to 120g prior to cooking, the microwave cooking time is generally approximately 70 to 100 seconds on full power. When developing the low carbohydrate bread, we did experience some problems of the bread adhering to the plate during microwave cooking. This was improved by including a proportion of whey protein (WPI) in example 7.

### Specific Embodiments

According to an aspect of the present invention, there is provided a method of forming a slice of bread or bread substitute comprising:
providing a particulate mixture including:
   a. 15 to 20 wt.% flaxseed,
   b. 5 to 10 wt.% chia seed,
wherein the combined amount of a. and b. is 20 to 25wt.% of the particulate mixture;
   c. 3 to 20 wt.% soluble fibre as disclosed herein, in particular selected from the group consisting of resistant dextrin, FOS, GOS, XOS, AXOS, beta glucan, gum acacia, pectin, CMC, and hydrolysed guar gum, preferably resistant dextrin or FOS;
   d. 20 to 25 wt.% gluten,
   e. 5 to 10 wt.% pulse protein, suitably selected from the group consisting of pea and lentil protein;
   f. 5 to 8 wt.% hydrolysed wheat protein, 3 to 5 wt.% whey protein;
wherein the combined amount of d., e., and f. is 35 to 45 wt.% of the particulate mixture, generally 35 to 40 wt.%;
   g. 5 to 30 wt.% egg, suitably 10 to 20 wt.% egg, generally 15 to 20 wt.% egg;
   h. raising agent, generally 2 to 4 wt.% baking powder;
   i. 0 to 10 wt.% cocoa powder, generally 5 to 10 wt.% cocoa powder;
   j. 0.5 to 2 wt.% flavourings (including salt);
wherein the particulate mixture includes less than 5 wt.% sugar,
wherein the mixture includes less than 5 wt.% wheat flour, generally less than 1 wt.% wheat flour
mixing the particulate mixture with a liquid carrier material;
cooking the resultant combination by microwave.

Generally, the ingredients listed above may form at least 90 wt.% of the mixture, typically at least 95 wt.%, suitably at least 98 wt.% of the mixture, with the remaining mixture being formed from additional components as described herein.

Alternatively, the ingredients listed above form 100 wt.% of the reactant mixture.

According to an aspect of the present invention, there is provided a method of forming a cake comprising:
providing a particulate mixture including:
   a. 7 to 15 wt.% flaxseed, suitably 7 to 10 wt.% flaxseed,
   b. 5 to 10 wt.% chia seed,
wherein the combined amount of a. and b. is 10 to 20 wt.% of the particulate mixture, suitably 10 to 15 wt.%;
   c. 3 to 20 wt.% soluble fibre as disclosed herein, in particular selected from the group consisting of resistant dextrin, FOS, GOS, XOS, AXOS, beta glucan, gum acacia, pectin, CMC, and hydrolysed guar gum, preferably resistant dextrin or FOS;
   d. 10 to 20 wt.% gluten,
   e. 10 to 15 wt.% pulse protein, suitably selected from the group consisting of pea and lentil protein
   f. 2 to 4 wt.% hydrolysed wheat protein, 4 to 6 wt.% whey protein
wherein the combined amount of d., e., and f. is 30 to 40 wt.%;
   g. 5 to 30 wt.% egg, suitably 10 to 20 wt.% egg, generally 15 to 20 wt.% egg;
   h. raising agent, generally 1 to 3 wt.% baking powder;
   i. 1 to 3 wt.% psyllium;
   j. 0 to 10 wt.% cocoa powder, generally 5 to 10 wt.% cocoa powder;
   k. 0.5 to 2 wt.% flavourings (including salt);
wherein the particulate mixture includes less than 5 wt.% sugar,
wherein the mixture includes less than 5 wt.% wheat flour, generally less than 1 wt.% wheat flour;
mixing the particulate mixture with a liquid carrier material;
cooking by microwave a unit of the resultant combination having an associated weight of 70 to 120 g.

Generally, the ingredients listed above may form at least 90 wt.% of the mixture, typically at least 95 wt.%, suitably at least 98 wt.% of the mixture, with the remaining mixture being formed from additional components as described herein.

Alternatively, the ingredients listed above form 100 wt.% of the reactant mixture.

According to a further aspect of the present invention, there is provided a method of forming a gluten-free cake comprising:
providing a particulate mixture including:
   a) 10 to 30 wt.% flaxseed, generally 15 to 25 wt.% flaxseed,
   b) 0 to 10 wt.% chia seed, generally 3 to 8 wt.% chia seed,
wherein the combined amount of a) and b) is 15 to 40 wt.% of the mixture;
   c) 3 to 20 wt.% soluble fibre as disclosed herein, in particular selected from the group consisting of resistant dextrin, FOS, GOS, XOS, AXOS, beta glucan, gum acacia, pectin, CMC, and hydrolysed guar gum, preferably resistant dextrin or FOS;
   d) 0 to 30 wt.% pulse protein, generally 10 to 20 wt.% pulse protein
   e) 0 to 25 wt.% of a protein selected from the group consisting of whey protein, including whey protein isolate and whey protein concentrate
wherein the combined amount of d), and e) is at least 13 wt.% of the particulate mixture,
generally at least 15 wt.%;
   f) 5 to 30 wt.% egg, suitably 10 to 20 wt.% egg, generally 15 to 20 wt.% egg;
   g) raising agent;
wherein the particulate mixture includes less than 5 wt.% sugar,
wherein the mixture includes 0% wheat flour
wherein the mixture is gluten-free
mixing the particulate mixture with a liquid carrier material;
cooking by microwave a unit of the resultant combination having an associated weight of 70 to 120 g.

Generally, the ingredients listed above may form at least 90 wt.% of the mixture, typically at least 95 wt.%, suitably at least 98 wt.% of the mixture, with the remaining mixture being formed from additional components as described herein.

Alternatively, the mixture may consist essentially of the ingredients listed above.

According to one embodiment, the method is for the preparation of a slice of bread, and includes providing a particulate mixture including
a. 10 to 25 wt.% flaxseed, suitably 15 to 25 wt.%,
b. 0 to 10 wt.% chia seed, suitably 2 to 10 wt.% chia seed,
   wherein the combined amount of a. and b. is 10 to 30 wt.% of the particulate mixture, generally 20 to 30 wt.%;
c. 3 to 20 wt.% soluble fibre as disclosed herein, in particular selected from the group consisting of resistant dextrin, FOS, GOS, XOS, AXOS, beta glucan, gum acacia, pectin, CMC, and hydrolysed guar gum, preferably resistant dextrin or FOS,
d. gluten, wherein the particulate mixture comprises up to 30 wt.% gluten, suitably 10 to 30 wt.% gluten, generally 15 to 25 wt.% gluten,
e. 0 to 15 wt.% pulse protein, suitably 5 to 10 wt.% pulse protein,
f. 0 to 9 wt.% of a protein selected from the group consisting of whey protein and hydrolysed wheat protein, suitably 5 to 9 wt.%;
   wherein the combined amount of d., e., and f. is at least 13 wt.% of the particulate mixture, generally at least 25 wt.%;
g. 5 to 30 wt.% egg, suitably 10 to 20 wt.% egg, generally 15 to 20 wt.% egg;
h. raising agent;
wherein the particulate mixture includes less than 5 wt.% sugar,
wherein the mixture includes less than 5 wt.% wheat flour, generally less than 1 wt.% wheat flour;
mixing the particulate mixture with a liquid carrier material, generally comprising or consisting of water
providing the resultant combination onto a receptacle with low or no side walls, typically a plate;
cooking the combination in a microwave, where the combination has an associated weight of 50 to 100 g, generally for two minutes or less on full power, suitably 60 to 90 seconds.

Alternatively, a gluten-free mixture provided in the method for the preparation of bread/bread substitute disclosed above may comprise:
a) 10 to 25 wt.% flaxseed, suitably 15 to 25 wt.% flaxseed,
b) 0 to 10 wt.% chia seed, suitably 3 to 7 wt.% chia seed,
   wherein the combined amount of a) and b) is 15 to 40 wt.% of the particulate mixture, generally 20 to 30 wt.%;
c) 3 to 20 wt.% soluble fibre as disclosed herein, in particular selected from the group consisting of resistant dextrin, FOS, GOS, XOS, AXOS, beta glucan, gum acacia, pectin, CMC, and hydrolysed guar gum, preferably resistant dextrin or FOS,
d) 0 to 30 wt.% pulse protein,
e) 0 to 30 wt.% of a protein selected from the group consisting of whey protein for instance whey protein isolate and whey protein concentrate,
   wherein the combined amount of d), and e) is at least 13 wt.% of the particulate mixture, generally at least 15 wt.%;
f) 5 to 30 wt.% egg, suitably 10 to 20 wt.% egg, generally 15 to 20 wt.% egg;
g) raising agent;
wherein the particulate mixture includes less than 5 wt.% sugar,
wherein the mixture does not include wheat flour
wherein the mixture is gluten-free;
mixing the particulate mixture with a liquid carrier material;
cooking 50 to 100 g of the resultant combination by microwave.

According to a further aspect of the present invention, the method is for the preparation of a cake, in particular a muffin or a cup cake, and includes providing a mixture including:
a. 7 to 25 wt.% flaxseed, suitably 7 to 15 wt.% flaxseed,
b. 0 to 10 wt.% chia seed, suitably 2 to 10 wt.% chia seed,
   wherein the combined amount of a. and b. is 10 to 30 wt.% of the particulate mixture, suitably 10 to 20 wt.%;
c. 3 to 20 wt.% soluble fibre as disclosed herein, in particular selected from the group consisting of dextrin, FOS, GOS, XOS, AXOS, beta glucan, gum acacia, pectin, CMC, and hydrolysed guar gum, preferably resistant dextrin or FOS,
d. 10 to 30 wt.% gluten, suitably 10 to 20 wt.% gluten,
e. 0 to 15 wt.% pulse protein, suitably 5 to 15 wt.% pulse protein,
f. 0 to 9 wt.% of a protein selected from the group consisting of whey protein and hydrolysed wheat protein, suitably 5 to 9 wt.%;
   wherein the combined amount of d., e., and f. is at least 13 wt.% of the particulate mixture, generally at least 20 wt.%;
g. 5 to 30 wt.% egg, suitably 10 to 20 wt.% egg, generally 15 to 20 wt.% egg;
h. raising agent;
wherein the particulate mixture includes less than 5 wt.% sugar,
wherein the mixture includes less than 5 wt.% wheat flour, generally less than 1 wt.% wheat flour,
mixing the particulate mixture with a liquid carrier material, generally comprising or consisting of water,
providing the resultant combination into a receptacle with walls which extend at least to the height of the desired food product after cooking, typically a cup, mug or high sided bowl;
the combination is cooked in a microwave;
cooking the in a microwave where the combination has an associated weight of 70 to 120 g, suitably for 70 to 100 seconds.

Alternatively, the method may be the preparation of gluten-free cake including the preparation of a mixture comprising:
a) 10 to 30 wt.% flaxseed, generally 15 to 25 wt.% flaxseed;
b) 0 to 10 wt.% chia seed, generally 5 to 10 wt.% chia seed;
   wherein the combined amount of a) and b) is 15 to 40 wt.% of the mixture;
c) 3 to 20 wt.% soluble fibre as disclosed herein, in particular selected from the group consisting of dextrin, FOS, GOS, XOS, AXOS, beta glucan, gum acacia, pectin, CMC, and hydrolysed guar gum, preferably resistant dextrin or FOS,
d) 0 to 30 wt.% pulse protein,
e) 0 to 30 wt.% of a protein selected from the group consisting of whey protein, including whey protein isolate and whey protein concentrate,
   wherein the combined amount of d), and e) is at least 13 wt.% of the particulate mixture,
   generally at least 15 wt.%;
f) 5 to 30 wt.% egg, suitably 10 to 20 wt.% egg, generally 15 to 20 wt.% egg;
g) raising agent;
wherein the particulate mixture includes less than 5 wt.% sugar,
wherein the mixture does not include wheat flour,
wherein the mixture is gluten-free
mixing the particulate mixture with a liquid carrier material;
cooking by microwave a unit of the resultant combination having an associated weight of 70 to 120 g.

The mixture may be packaged under a protective atmosphere, in particular under nitrogen.

Packaging needs to be controlled to minimise oxidation and the development of off-flavours in the fat. The levels of heavy metals in the ingredients must be controlled to avoid oxidation in the dry powder mix.

The mixture may be packaged into a barrier pack, such as an aluminium foil laminate barrier pack.

The present invention will now be described by way of example only.

### Examples

Microwave bread substitute - development examples (amounts provided in wt.% of combination of mixture and liquid prior to cooking. The provided amounts may be doubled to show the weight percentages of the various ingredients in the particulate mixture). All of these formulations include 50% moisture after mixing (less after cooking). Later versions used increased moisture levels.

"Comp" refers to comparative.

**Table 1: Microwave bread substitute development examples.**

| | 1 Comp | 2 Comp | 3 Comp | 4 Comp | 5 Comp | 6 | 7 Comp |
|---|---|---|---|---|---|---|---|
| Milled flaxseed | 18.12 | 19.34 | 19.0 | 16.4 | 4.0 | 4.8 | 9.0 |
| Milled chia seed | -- | -- | -- | -- | 13.75 | 2.5 | 4.0 |
| Vital Gluten | 11.78 | 12.6 | 12.37 | 12.32 | 12.55 | 9.95 | 10.5 |
| 80% Pea protein isolate | -- | -- | -- | -- | 1.0 | 4.66 | 2.0 |
| 50% Lentil protein | -- | -- | -- | -- | -- | 5.35 | 2.0 |
| Psyllium | 4.29 | 4.58 | 4.5 | 4.48 | 3.0 | 3.55 | |
| Whole egg Powder | 4.01 | 4.29 | 4.21 | 4.54 | 4.2 | 10.15 | 9.0 |
| Egg white powder | -- | -- | -- | -- | 4.2 | -- | -- |
| Hydrolysed Wheat protein | 3.56 | 3.82 | 3.74 | 3.73 | 1.5 | 1.8 | 3.7 |
| Hydrolysed pea protein | 1.61 | 1.72 | 1.69 | 1.68 | -- | -- | -- |
| Nutriose | -- | -- | -- | 2.61 | 2.15 | 3.42 | 5.9 |
| Salt | 0.78 | 0.84 | 0.82 | 0.88 | 0.75 | 0.6 | 0.4 |
| Sugar | 0.35 | | | 0.65 | -- | -- | -- |
| Guar | 0.07 | 0.08 | 0.07 | 0.05 | 0.1 | 0.1 | -- |
| Xanthan | 0.07 | 0.08 | 0.07 | 0.05 | 0.05 | 0.05 | -- |
| Dried yeast | 5.36 | -- | -- | -- | -- | -- | -- |
| Baking powder | -- | 2.65 | 3.53 | 2.61 | 2.75 | 3.07 | -- |
| Pell Klassic baking powder | -- | -- | -- | -- | -- | -- | 1.5 |
| Whey protein isolate | -- | -- | -- | -- | -- | -- | 2.0 |
| Bread flavour | -- | -- | -- | -- | √ | √ | √ |
| Water | 50.0 | 50.0 | 50.0 | 50.0 | 50.0 | 50.0 | 50.0 |
| Process* | Oven | Mic | Mic | Mic | Mic | Mic | Mic |
| Height of bread mm | 62 | 33 | 36 | 38 | 60 | 54 | 12 |
| Width of bread mm | 70 | 90 | 90 | 88 | 75 | 80 | 110 |

| | | | | | | | |
|---|---|---|---|---|---|---|---|
| *Oven process: dough hook mixer, one hour leavening 37C, bake 15 - 20 min 180C * Microwave: 30-60 second hand mix with water, place dough ball on plate, microwave cook 75-90 seconds full powder | | | | | | | |

The microwave bread product of example 1 was designed for oven baking following yeast leavening (example 1). It was designed to develop a significant dough viscosity during mixing in either a bread maker or a domestic planetary mixer with dough hook. The combination of proteins and hydrolysed proteins was designed to be cost-effective and to match the required WHO amino acid profile as well as achieve a satisfactory texture. Raw material suppliers recommended hydrolysed proteins to avoid excess structure after baking. This system originally required sugar addition to feed the yeast for leavening. When changing to a chemically-leavened (microwave-cooked) formulation, the sugar and yeast was replaced by baking powder (example 2). Individual bread rolls were produced from 60g of powder mix plus the indicated relative volume of water being added and mixed by hand in the case of the microwave products or by planetary mixer/dough hook for oven baking. There was a significant reduction in volume of the bread roll when changing to microwave cooking in example 2. There was also obviously a lack of a brown crust on changing to microwave cooking and the flavour was not great. The texture was acceptable although a little dense and chewy. The baking powder was then increased in an attempt to increase the volume after cooking (example 3). There was a slight increase in volume although the smell and flavour were worse. After returning to a lower baking powder level, a small increase in volume was achieved by adding more water. The texture was made less dens by replacing some of the flaxseed and proteins with soluble fibre (Nutriose FB06). A small amount of sugar was added to see if it improved flavour, which it did not (example 4).

At this stage, it was realised that the flaxseed level needed reducing to acceptable levels to reduce the concentration of anti-nutritional factors, and in the light of the limited amount of flaxseed permitted in the United States (10% maximum by weight). The introduction of chia seed (another high protein, high fibre plant seed) was intended to compensate for the reduced flaxseed level. We also looked at a combination of whole egg powder and egg albumin powder (1:1) to see if this would increase volume. Anticipating a reduced dough structure from the reduction if flaxseed, we increased the amount of gum and changed to a more synergistic ratio of 2:1 guar gum/xanthan gum. Pea protein isolate was introduced to partially replace the removal of hydrolysed protein. These changes overall, produced a less dense dough and greatly improved volume when cooked in the microwave - almost matching the oven- baked results. In an attempt to improve flavour, we reduced the hydrolysed wheat gluten and omitted the hydrolysed pea protein, which was thought to have the stronger off-flavour of the two. Adding a liquid bread flavour to the powder, did not affect the bread flavour significantly, although the release of a strong bread-like aroma during microwave heating was seen as a positive attribute. The liquid flavour would be replaced by a spray dried flavour in the future. Removing so much flaxseed resulted in an unappetising lighter, 'green' colour for the cooked bread substitute and the flavour was poor (example 5).

In example 6, it had been realised that the chia seed level needed reducing significantly, since it qualifies as a novel food ingredient in the EU, with a maximum inclusion rate of 5%. It was thought that the texture of example 5 was a little dry and related work on the chocolate muffin had indicated that egg albumin gives a dry texture. We therefore used a high level of whole egg powder on its own to contribute to the overall protein level and provide structure, without a dry texture. The amount of pea protein isolate was increased and 50% lentil protein (Ingredion Vitessence 2550) was introduced. Lentil protein was used since it has less flavour than some other pulse proteins. However, the flavour and colour of example 6 was still poor, with a slightly salty note.

At this stage, we decided to change from the production of bread rolls to the production of single slices of bread (60g in each slice prior to microwave cooking, compared to 120g per bread roll). This would need a much lower mix viscosity and therefore the gums and psyllium were omitted from example 7. The mix was almost pourable and was spread with a spoon into a rough circle (diameter 110mm) - to produce a round slice of bread after cooking. Other changes in example 7 included a reduction in lentil protein and a corresponding increase in hydrolysed wheat protein - intended to improve flavour. Whey protein was added in the form of whey protein isolate (WPI) to boost the protein level and allow a reduction in pulse protein, which generally has a poorer taste. The WPI was also added to reduce the tendency for the bread to adhere to the plate during cooking. To reduce saltiness, there was a reduction in salt and a change to a lower level of an alternative baking powder (Pell Klassic from Kudos). These changes were successful. The colour and flavour were improved, the texture was good and the crumb strength was sufficient to allow the slice to be peeled off the plate whilst hot.

Two slices of example 7 (produced from 60g of powder mix, total weight about 100g allowing for evaporation) were produced in about two minutes and contained 26.4g of protein compared to 9.9g of protein in 100g of a typical supermarket bread and only 14g of protein in some so-called high protein bread. Full nutritional values are compared in Table 2. Since the total solids and calorific values are similar, the moisture values are presumably similar. The carbohydrate is approximately 10 times lower in example 7 and fibre 5 times higher - with additional essential fatty acids from the flaxseed and chia seeds.

**Table 2 Comparison of the nutritional values for standard supermarket bread and a high protein, microwave bread slice (example 7).**

| Per 100g | Supermarket bread | Example 7 (Comp) (calculated) |
|---|---|---|
| Energy | 244kcal/1030kJ | 255kcal/1071kJ |
| Protein | 9.9g | 26.4g |
| Carbohydrate of which sugars | 43.8g | 4.1g |
| | 2.2g | 0.9g |
| Fat of which saturated fat | 2.0g | 11.0g |
| | 0.7g | 2.1g |
| Fibre | 2.6g | 12.5g |
| Salt | 1.0g | 1.1g |
| Total solids | 59.3g | 58.1g |

Microwave chocolate muffin - development examples: All of the formulations include 50% moisture after mixing (but before cooking) (amounts provided in wt.% of combination of mixture and water prior to cooking. The provided amounts may be doubled to show the weight percentages of the various ingredients in the particulate mixture prior to water addition).

**Table 3 Microwave chocolate muffin development examples* Typically hand-stir 60g of powder with 60g of cold water for 30-60 seconds. Either from into a dough ball and microwave on a plate or alternatively mix and microwave in a mug. Cook 75-90 seconds on full power.**

| | 8 | 9 | 10 | 11 | 12 | 13 |
|---|---|---|---|---|---|---|
| Milled flaxseed | 15.29 | 15.24 | 12.54 | 4.0 | 3.84 | 4.0 |
| Milled chia seed | -- | -- | -- | 4.0 | 2.38 | 2.5 |
| Vital Gluten | 12.31 | 7.63 | 9.33 | 8.68 | 7.92 | 8.30 |
| 80% Pea protein isolate | -- | -- | -- | 2.0 | 3.33 | 3.5 |
| 50% Lentil protein | -- | -- | -- | -- | 2.84 | 2.99 |
| Cocoa powder | 4.48 | 4.47 | 4.48 | 5.0 | 4.76 | 5.0 |
| Psyllium | 4.48 | 4.47 | 4.48 | 2.95 | 2.33 | 0.95 |
| Whole egg Powder | 3.03 | 3.02 | 6.06 | 7.0 | 9.52 | 10.0 |
| Egg white powder | 3.03 | 3.02 | -- | -- | -- | -- |
| Hydrolysed Wheat protein | -- | -- | 1.82 | 2.50 | 1.43 | 1.5 |
| Whey protein isolate | -- | -- | -- | -- | 2.38 | 2.5 |
| Nutriose FB06 | -- | 4.65 | 3.36 | 2.55 | 4.32 | 4.54 |
| Wheat Flour | -- | -- | -- | 4.49 | -- | -- |
| Salt | 0.56 | 0.56 | 0.56 | 0.60 | -- | -- |
| Guar | 0.09 | 0.09 | 0.09 | 0.1 | -- | -- |
| Xanthan | 0.05 | 0.05 | 0.05 | 0.05 | -- | -- |
| Baking powder | 2.61 | 2.60 | 2.61 | 2.80 | 1.9 | -- |
| Malic acid | 0.28 | 0.14 | 0.33 | -- | -- | -- |
| Pell Klassic baking powder | -- | -- | -- | -- | -- | 1.0 |
| Choc flavour | 0.37 | 0.65 | 0.93 | 0.20 | 0.19 | 0.2 |
| Chocolate pieces | 3.36 | 3.35 | 3.36 | 3.0 | 2.76 | 2.9 |
| Acesulfame K | -- | -- | -- | -- | 0.07 | 0.08 |
| Sucralose | 0.06 | 0.06 | 0.06 | 0.08 | 0.03 | 0.04 |
| Water | 50.0 | 50.0 | 50.0 | 50.0 | 50.0 | 50.0 |
| Veg oil | -- | √ | √ | -- | -- | -- |
| Process* | Plate | Plate | Mug | Plate | Mug | Mug |
| Maximum height mm | 48 | 29 | 50 | 69 | 55 | 59 |
| Maximum width mm | 90 | 100 | 70 | 70 | 70 | 70 |

The microwave chocolate muffin was developed in parallel with the microwave bread and some changes were influenced by results obtained in the bread systems. Initial chocolate muffin systems were designed to be formed into a dough ball, placed on a plate and microwaved to give a muffin-like shape after cooking. This required quite a firm structure prior to cooking, even though the gluten viscosity was presumably not fully developed, since only 30 -60 seconds of hand mixing of powder with water was used. The gluten, psyllium, flaxseed and gums (xanthan/guar) were major contributors to the final structure prior to cooking. In order to add a relatively high level of cocoa powder, the hydrolysed protein used in the microwave bread formulations, was initially omitted. The first formulation (**example 8**) had a dry, chewy texture as might be expected for a high protein muffin. It also had poor flavour. Malic acid had been added to in theory assist volume and flavour. Pre-made chocolate pieces were included in an attempt to make the product more palatable, although these do contain sugar. There was a notable chocolate aroma during cooking and this was thought to be a positive attribute, resulting from the added spray dried chocolate flavour.

The addition of vegetable oil (20%) was evaluated in the next recipe (**example 9**), as well as a significant reduction in gluten (replaced by soluble fibre -Nutriose) - in an attempt to improve texture. This resulted in a significant reduction in the protein level and a softer dough ball resulting in a greatly reduced volume after microwave cooking. Texture was a little better, flavour was not. In **example 10,** the gluten was increased to try to get some volume back after cooking. In this instance the muffin was cooked in a ceramic mug. Based on our understanding at the time, this in theory would allow a lower gluten level to give a less tough texture after cooking and less robust dough ball before cooking - but the walls of the mug, would stop the muffin collapsing during cooking, as was believed to have occurred in example 9. These changes were successful, using an intermediate gluten level. The volume was better, and the texture was significantly improved. It was thought this improvement in texture was also as a result of removing the egg albumin and increasing the whole egg powder. A small amount of hydrolysed wheat protein had also been introduced to increase the protein level. The flavour was no better however and had a slight liquorice off-note. It was thought this could be due to excess chocolate flavour having been added. Example 10 was repeated with decreasing flavour levels and an immediate improvement in flavour was seen with 0.2% being chosen as the best result. However, it was noticed that the sweetness was low and it took time to develop in the mouth - therefore the sucralose concentration was increased significantly in the next example.

In **example 11,** the chosen 0.2% spray dried flavour level was used in conjunction with 33% more sucralose. Psyllium was reduced, flaxseed was reduced and chia seed introduced - in line with the microwave bread systems, as described previously. The malic acid was removed to see what effect it had on flavour. A small amount of neutral flavour wheat flour was added for extra protein. A small amount of pea protein isolate was introduced as an inexpensive protein. The pea isolate concentration was limited to avoid flavour problems. Example 11 had the best flavour and texture so far although it was noticed there was still no immediate sweetness in the mouth during eating, even though the sucralose had been increased. This was thought therefore, to be a feature of the sucralose sweetener in this application, rather than a result of too low a sucralose level being used. Malic acid appears unnecessary as far as flavour is concerned. Example 11 was also thought to be too salty by some tasters. The volume was good, even though the psyllium content had been reduced because of concerns about possible negative digestive effects and since there is less need for viscosity prior to cooking now that a ceramic mug was being used for mixing and cooking all muffin formulations.

In **example 12,** it was decided to increase the protein level further by increasing the egg, pea protein isolate and introducing whey protein isolate (WPI) and 50% lentil flour, which had been used successfully in the bread system. WPI is expensive, but has a good flavour profile and low sugar levels compared to other dairy proteins. It also contributes structure after heating. The wheat flour was omitted to accommodate the protein increase and to reduce the carbohydrate level. To reduce saltiness, the salt was omitted and baking powder reduced. The xanthan and guar gums were omitted since there was no longer a need to develop viscosity prior to cooking and the psyllium was further reduced for reasons described previously. Acesulfame K was introduced in conjunction with sucralose, in an attempt to introduce a more rapid development of sweetness in the mouth. All these changes seemed successful - achieving a higher protein level, with rapid development of sweetness in the mouth, which lingered in a similar manner to sucrose and good overall flavour and texture. Saltiness was no longer a problem.

In **example 13,** the psyllium was reduced further and the amount of baking powder was halved - to reduce the potential for metallic off-tastes. A new, high potassium commercial baking powder was also used (Kudos Pell Klassic). This system had good flavour and produced a good texture.

The nutritional data for a 100g muffin produced from 60g of the example 13 mix (including chocolate pieces) is shown in Table 3. Whilst the supermarket muffin has a higher total solids level (less moisture, which contributes to its higher energy value); example 13 still has nearly four times as much protein and less than 10% of the sugar level, with six times as much fibre.

**Table 4 Comparison of the nutritional values for a standard baked supermarket chocolate muffin and a high protein microwave muffin (example 13).**

| Per 100g | Supermarket muffin | Example 13 (calculated) |
|---|---|---|
| Energy | 412kcal/1726kJ | 244kcal/1,100kJ |
| Protein | 6.7g | 25.4g |
| Carbohydrate of which sugars | 51.6g | 6.8g |
| | 31.6g | 3.0g |
| Fat of which saturated fat | 19.5g | 9.7g |
| | 3.0g | 3.1g |
| Fibre | 1.7g | 10.3g |
| Salt | 0.4g | 0.5g |
| Total solids | 79.9 | 52.7 |

### Gluten-Free (GF) Food Products

The formulations detailed in Table 5 below were produced. In each sample, 30g of powder was mixed with 40g of water for approximately 60 seconds. The chocolate muffin was cooked in the mug in which it was mixed to produce a muffin approximately 3.5cm deep. The bread substitute was spread on a plate to form a slightly domed slice of bread substitute, 1.3cm deep in the middle and 12 cm in diameter after cooking.

The GF microwave chocolate muffin and bread substitute powder mixes are approximately 43% protein by weight protein.

**Table 5 Microwave, Gluten-Free (GF) chocolate muffin and bread substitute formulations Features, integers, characteristics, compounds, chemical moieties or groups described in conjunction with a particular aspect, embodiment or example of the invention are to be understood to be applicable to any other aspect, embodiment or example described herein unless incompatible therewith.**

| | Choc muffin | | | Bread substitute | |
|---|---|---|---|---|---|
| Ref. | 73/12 | | | 73/17 | |
| Ingredient and % Protein | g | % | | g | % |
| Flaxseed (22.1%P) | 6.0 | 20 | | 6.0 | 20 |
| Chia (20%P) | 1.774 | 5.91 | | 1.5 | 5 |
| Psyllium | 0.4 | 1.33 | | 0.57 | 1.9 |
| Whole egg (48% P) | 3.0 | 10.0 | | 2.5 | 8.33 |
| Protalac 95 (89% P) | 6.33 | 21.1 | | 7.0 | 23.33 |
| Nutriose FM06 | 2.1 | 7.0 | | 2.44 | 8.13 |
| Pell K-Rise GF | 0.5 | 1.67 | | 0.5 | 1.67 |
| Lentil 2550 (51%P) | 1.8 | 6.0 | | 1.7 | 5.67 |
| Pea isolate (77%P) | 3.0 | 10.0 | | 3.0 | 10.0 |
| Almond Flour | - | - | | 2.34 | 7.8 |
| Dove GF flour | - | - | | 2.0 | 6.67 |
| Cocoa powder D11 SSOL (20.7%P) | 3.0 | 10.0 | | - | - |
| Choc pieces(5.7%P) | 1.74 | 5.8 | | - | - |
| Salt | 0.2 | 0.67 | | 0.3 | 1.0 |
| Chocolate Flavour, Mane 0053764 | 0.03 | 0.1 | | - | - |
| Acesulfame K | 0.045 | 0.15 | | - | - |
| Sucralose | 0.021 | 0.07 | | - | - |
| Xanthan Gum 200 mesh | 0.06 | 0.2 | | 0.15 | 0.5 |
| **Total** | 30g | 100% | | 30g | 100% |

## Claims

1. A method of forming a slice of bread or bread substitute comprising:
providing a particulate mixture including:
a. 10 to 25 wt.% flaxseed,
b. 0 to 10 wt.% chia seed,
wherein the combined amount of a. and b. is 10 to 30 wt.% of the particulate mixture;
c. 3 to 20 wt.% soluble fibre selected from the group consisting of resistant dextrin, fructooligosaccharide (FOS), galactooligosaccharides (GOS), xylan oligosaccharides (XOS), arabinoxylans (AXOS), beta glucan, gum acacia, pectin, carboxymethyl cellulose (CMC), and hydrolysed guar gum,
d. gluten, wherein the particulate mixture comprises up to 30 wt.% gluten,
e. 0 to 15 wt.% pulse protein,
f. 0 to 9 wt.% of a protein selected from the group consisting of whey protein and hydrolysed wheat protein,
wherein the combined amount of d., e., and f. is at least 13 wt.% of the particulate mixture,
g. 5 to 30 wt.% egg,
h. raising agent;
wherein the particulate mixture includes less than 5 wt.% sugar,
wherein the particulate mixture includes less than 5 wt.% wheat flour;
mixing the particulate mixture with a liquid carrier material;
cooking the resultant combination by microwave.

2. The method as claimed in claim 1 wherein the particulate mixture includes:
a. 15 to 25 wt.% flaxseed,
b. 2 to 10 wt.% chia seed,
wherein the combined amount of a. and b. is 20 to 30 wt.% of the particulate mixture;
c. 3 to 20 wt.% soluble fibre selected from the group consisting of resistant dextrin and FOS,
d. 15 to 25 wt.% gluten,
e. 5 to 10 wt.% pulse protein,
f. 5 to 9 wt.% of a protein selected from the group consisting of whey protein and hydrolysed wheat protein,
wherein the combined amount of d), e) and f) is at least 25 wt.% of the particulate mixture,
g. 15 to 20 wt.% egg.

3. A method of forming a slice of bread or bread substitute comprising:
providing a particulate mixture including
a) 10 to 25 wt.% flaxseed,
b) 0 to 10 wt.% chia seed,
wherein the combined amount of a) and b) is 15 to 40 wt.% of the particulate mixture,
c) 3 to 20 wt.% soluble fibre selected from the group consisting of dextrin, fructooligosaccharide (FOS), galactooligosaccharides (GOS), xylan oligosaccharides (XOS), arabinoxylans (AXOS), beta glucan, gum acacia, pectin, carboxymethyl cellulose (CMC), and hydrolysed guar gum,
d) 0 to 30 wt.% pulse protein,
e) 0 to 30 wt.% of whey protein,
wherein the combined amount of d) and e) is at least 13 wt.% of the particulate mixture,
f) 5 to 30 wt.% egg,
g) raising agent;
wherein the particulate mixture includes less than 5 wt.% sugar,
wherein the particulate mixture is gluten-free;
mixing the particulate mixture with a liquid carrier material;
cooking 50 to 100 g of the resultant combination by microwave.

4. A method as claimed in claim 3 wherein the particulate mixture includes:
a. 15 to 25 wt.% flaxseed,
b. 3 to 7 wt.% chia seed,
wherein the combined amount of a. and b. is 20 to 30 wt.% of the particulate mixture,
c. 3 to 20 wt.% soluble fibre selected from the group consisting of resistant dextrin and FOS
wherein the combined amount of d), and e) is at least 15 wt.% of the particulate mixture, 15 to 20 wt.% egg.

5. The method as claimed in any one of claims 1 to 4 wherein
prior to cooking, the combination is provided on a receptacle with low or no side walls, and
50 to 100 g of the combination is cooked in a microwave for two minutes or less on full power.

6. A method of forming a cake comprising:
providing a particulate mixture including:
a. 7 to 25 wt.% flaxseed,
b. 0 to 10 wt.% chia seed,
wherein the combined amount of a. and b. is 10 to 30 wt.% of the particulate mixture,
c. 3 to 20 wt.% soluble fibre selected from the group consisting of resistant dextrin, fructooligosaccharide (FOS), galactooligosaccharides (GOS), xylan oligosaccharides (XOS), arabinoxylans (AXOS), beta glucan, gum acacia, pectin, carboxymethyl cellulose (CMC), and hydrolysed guar gum,
d. 10 to 30 wt.% gluten,
e. 0 to 15 wt.% pulse protein,
f. 0 to 9 wt.% whey protein,
wherein the combined amount of d., e., and f. is at least 13 wt.% of the particulate mixture, generally at least 20 wt.%;
g. 5 to 30 wt.% egg,
h. raising agent;
wherein the particulate mixture includes less than 5 wt.% sugar,
wherein the particulate mixture includes less than 5 wt.% wheat flour;
mixing the particulate mixture with a liquid carrier material;
cooking by microwave a unit of the resultant combination having an associated weight of 70 to 120 g.

7. The method as claimed in claim 6 wherein the particulate mixture includes:
a. 7 to 15 wt.% flaxseed,
b. 2 to 10 wt.% chia seed,
wherein the combined amount of a. and b. is 10 to 20 wt.% of the particulate mixture;
c. 3 to 20 wt.% soluble fibre selected from the group consisting of resistant dextrin and FOS,
d. 10 to 20 wt.% gluten,
e. 5 to 15 wt.% pulse protein,
f. 5 to 9 wt.% whey protein,
wherein the combined amount of d., e., and f. is at least 20 wt.% of the particulate mixture;
g. 15 to 20 wt.% egg.

8. A method of forming a cake comprising:
providing a particulate mixture including:
a) 10 to 30 wt.% flaxseed,
b) 0 to 10 wt.% chia seed,
wherein the combined amount of a) and b) is 15 to 40 wt.% of the particulate mixture;
c) 3 to 20 wt.% soluble fibre selected from the group consisting of dextrin, fructooligosaccharide (FOS), galactooligosaccharides (GOS), xylan oligosaccharides (XOS), arabinoxylans (AXOS), beta glucan, gum acacia, pectin, carboxymethyl cellulose (CMC), and hydrolysed guar gum,
d) 0 to 30 wt.% pulse protein,
e) 0 to 30 wt.% of whey protein,
wherein the combined amount of d), and e) is at least 13 wt.% of the particulate mixture;
f) 5 to 30 wt.% egg,
g) raising agent;
wherein the particulate mixture includes less than 5 wt.% sugar,
wherein the particulate mixture is gluten-free;
mixing the particulate mixture with a liquid carrier material;
cooking by microwave a unit of the resultant combination having an associated weight of 70 to 120 g.

9. The method as claimed in claim 8 wherein the particulate mixture includes:
a) 15 to 25 wt.% flaxseed,
b) 5 to 10 wt.% chia seed,
c) 3 to 20 wt.% soluble fibre selected from the group consisting of resistant dextrin and FOS,
wherein the combined amount of d), and e) is at least 15 wt.% of the particulate mixture;
f) 15 to 20 wt.% egg.

10. The method as claimed in any one of claims 6 to 9, wherein
prior to cooking, the combination is provided in a cup, mug or high sided bowl with walls which extend at least to the height of the desired food product after cooking;
the combination is cooked in a microwave for 70 to 100 seconds on full power.

11. The method as claimed in any preceding Claim wherein the egg is in the form of whole egg powder, egg white powder, or a combination thereof.

12. The method as claimed in any preceding Claim wherein at least 90 wt.% of the particulate mixture is formed from the specified ingredients.

13. The method as claimed in any preceding claim wherein the liquid carrier material comprises or consists of water, oil, milk, cream, yoghurt, or dairy free-alternatives thereof or comprises creme fraiche or soft cheese.

14. The method as claimed in any preceding claim wherein the combination includes 55-60% carrier material and 40-45% of the particulate mixture.

15. The method as claimed in either one of claim 6 and claim 8 wherein the cake is in the form of a waffle, muffin, scone, pancake or crumpet.

## Patentansprüche

1. Verfahren zum Ausbilden einer Scheibe Brot oder eines Brotersatzes, das Folgendes umfasst:
Bereitstellen eines Partikelgemischs, das Folgendes beinhaltet:
a. 10 bis 25 Gew.-% Leinsamen,
b. 0 bis 10 Gew.-% Chiasamen,
wobei die kombinierte Menge von a. und b. 10 bis 30 Gew.-% des Partikelgemischs beträgt;
c. 3 bis 20 Gew.-% lösliche Ballaststoffe, ausgewählt aus der Gruppe bestehend aus resistentem Dextrin, Fructooligosaccharid (FOS), Galactooligosacchariden (GOS), Xylanoligosacchariden (XOS), Arabinoxylanen (AXOS), Beta-Glucan, Gummi arabicum, Pektin, Carboxymethylcellulose (CMC) und hydrolysiertem Guarkernmehl,
d. Gluten, wobei das Partikelgemisch bis zu 30 Gew.-% Gluten umfasst,
e. 0 bis 15 Gew.-% Hülsenfruchtprotein,
f. 0 bis 9 Gew.-% eines Proteins, ausgewählt aus der Gruppe bestehend aus Molkenprotein und hydrolysiertem Weizenprotein,
wobei die kombinierte Menge von d., e. und f. mindestens 13 Gew.-% des Partikelgemischs beträgt,
g. 5 bis 30 Gew.-% Ei,
h. Backtriebmittel;
wobei das Partikelgemisch weniger als 5 Gew.-% Zucker beinhaltet,
wobei das Partikelgemisch weniger als 5 Gew.-% Weizenmehl beinhaltet;
Mischen des Partikelgemischs mit einem flüssigen Trägermaterial;
Garen der resultierenden Kombination mittels Mikrowelle.

2. Verfahren nach Anspruch 1, wobei das Partikelgemisch Folgendes beinhaltet:
a. 15 bis 25 Gew.-% Leinsamen,
b. 2 bis 10 Gew.-% Chiasamen,
wobei die kombinierte Menge von a. und b. 20 bis 30 Gew.-% des Partikelgemischs beträgt;
c. 3 bis 20 Gew.-% lösliche Ballaststoffe, ausgewählt aus der Gruppe bestehend aus resistentem Dextrin und FOS,
d. 15 bis 25 Gew.-% Gluten,
e. 5 bis 10 Gew.-% Hülsenfruchtprotein,
f. 5 bis 9 Gew.-% eines Proteins, ausgewählt aus der Gruppe bestehend aus Molkenprotein und hydrolysiertem Weizenprotein,
wobei die kombinierte Menge von d), e) und f) mindestens 25 Gew.-% des Partikelgemischs beträgt,
g. 15 bis 20 Gew.-% Ei.

3. Verfahren zum Ausbilden einer Scheibe Brot oder eines Brotersatzes, das Folgendes umfasst:
Bereitstellen eines Partikelgemischs, das Folgendes beinhaltet
a) 10 bis 25 Gew.-% Leinsamen,
b) 0 bis 10 Gew.-% Chiasamen,
wobei die kombinierte Menge von a) und b) 15 bis 40 Gew.-% des Partikelgemischs beträgt,
c) 3 bis 20 Gew.-% lösliche Ballaststoffe, ausgewählt aus der Gruppe bestehend aus Dextrin, Fructooligosaccharid (FOS), Galactooligosacchariden (GOS), Xylanoligosacchariden (XOS), Arabinoxylanen (AXOS), Beta-Glucan, Gummi arabicum, Pektin, Carboxymethylcellulose (CMC) und hydrolysiertem Guarkernmehl,
d) 0 bis 30 Gew.-% Hülsenfruchtprotein,
e) 0 bis 30 Gew.-% Molkenprotein,
wobei die kombinierte Menge von d) und e) mindestens 13 Gew.-% des Partikelgemischs beträgt,
f) 5 bis 30 Gew.-% Ei,
g) Backtriebmittel;
wobei das Partikelgemisch weniger als 5 Gew.-% Zucker beinhaltet,
wobei das Partikelgemisch glutenfrei ist;
Mischen des Partikelgemischs mit einem flüssigen Trägermaterial;
Garen von 50 bis 100 g der resultierenden Kombination mittels Mikrowelle.

4. Verfahren nach Anspruch 3, wobei das Partikelgemisch Folgendes beinhaltet:
a. 15 bis 25 Gew.-% Leinsamen,
b. 3 bis 7 Gew.-% Chiasamen,
wobei die kombinierte Menge von a. und b. 20 bis 30 Gew.-% des Partikelgemischs beträgt,
c. 3 bis 20 Gew.-% lösliche Ballaststoffe, ausgewählt aus der Gruppe bestehend aus resistentem Dextrin und FOS,
wobei die kombinierte Menge von d) und e) mindestens 15 Gew.-% des Partikelgemischs beträgt,
15 bis 20 Gew.-% Ei.

5. Verfahren nach einem der Ansprüche 1 bis 4, wobei
die Kombination vor dem Garen auf einem Behälter mit niedrigen Seitenwänden oder ohne Seitenwände bereitgestellt wird und
50 bis 100 g der Kombination zwei Minuten oder weniger bei voller Leistung in einer Mikrowelle gegart werden.

6. Verfahren zum Ausbilden eines Kuchens, das Folgendes umfasst:
Bereitstellen eines Partikelgemischs, das Folgendes beinhaltet:
a. 7 bis 25 Gew.-% Leinsamen,
b. 0 bis 10 Gew.-% Chiasamen,
wobei die kombinierte Menge von a. und b. 10 bis 30 Gew.-% des Partikelgemischs beträgt,
c. 3 bis 20 Gew.-% lösliche Ballaststoffe, ausgewählt aus der Gruppe bestehend aus resistentem Dextrin, Fructooligosaccharid (FOS), Galactooligosacchariden (GOS), Xylanoligosacchariden (XOS), Arabinoxylanen (AXOS), Beta-Glucan, Gummi arabicum, Pektin, Carboxymethylcellulose (CMC) und hydrolysiertem Guarkernmehl,
d. 10 bis 30 Gew.-% Gluten,
e. 0 bis 15 Gew.-% Hülsenfruchtprotein,
f. 0 bis 9 Gew.-% Molkenprotein,
wobei die kombinierte Menge von d., e. und f. mindestens 13 Gew.-% des Partikelgemischs, im Allgemeinen mindestens 20 Gew.-% beträgt;
g. 5 bis 30 Gew.-% Ei,
h. Backtriebmittel;
wobei das Partikelgemisch weniger als 5 Gew.-% Zucker beinhaltet,
wobei das Partikelgemisch weniger als 5 Gew.-% Weizenmehl beinhaltet;
Mischen des Partikelgemischs mit einem flüssigen Trägermaterial;
Garen einer Einheit der resultierenden Kombination, die ein zugehöriges Gewicht von 70 bis 120 g aufweist, mittels Mikrowelle.

7. Verfahren nach Anspruch 6, wobei das Partikelgemisch Folgendes beinhaltet:
a. 7 bis 15 Gew.-% Leinsamen,
b. 2 bis 10 Gew.-% Chiasamen,
wobei die kombinierte Menge von a. und b. 10 bis 20 Gew.-% des Partikelgemischs beträgt;
c. 3 bis 20 Gew.-% lösliche Ballaststoffe, ausgewählt aus der Gruppe bestehend aus resistentem Dextrin und FOS,
d. 10 bis 20 Gew.-% Gluten,
e. 5 bis 15 Gew.-% Hülsenfruchtprotein,
f. 5 bis 9 Gew.-% Molkenprotein,
wobei die kombinierte Menge von d., e. und f. mindestens 20 Gew.-% des Partikelgemischs beträgt;
g. 15 bis 20 Gew.-% Ei.

8. Verfahren zum Ausbilden eines Kuchens, das Folgendes umfasst:
Bereitstellen eines Partikelgemischs, das Folgendes beinhaltet:
a) 10 bis 30 Gew.-% Leinsamen,
b) 0 bis 10 Gew.-% Chiasamen,
wobei die kombinierte Menge von a) und b) 15 bis 40 Gew.-% des Partikelgemischs beträgt;
c) 3 bis 20 Gew.-% lösliche Ballaststoffe, ausgewählt aus der Gruppe bestehend aus Dextrin, Fructooligosaccharid (FOS), Galactooligosacchariden (GOS), Xylanoligosacchariden (XOS), Arabinoxylanen (AXOS), Beta-Glucan, Gummi arabicum, Pektin, Carboxymethylcellulose (CMC) und hydrolysiertem Guarkernmehl,
d) 0 bis 30 Gew.-% Hülsenfruchtprotein,
e) 0 bis 30 Gew.-% Molkenprotein,
wobei die kombinierte Menge von d) und e) mindestens 13 Gew.-% des Partikelgemischs beträgt;
f) 5 bis 30 Gew.-% Ei,
g) Backtriebmittel;
wobei das Partikelgemisch weniger als 5 Gew.-% Zucker beinhaltet,
wobei das Partikelgemisch glutenfrei ist;
Mischen des Partikelgemischs mit einem flüssigen Trägermaterial;
Garen einer Einheit der resultierenden Kombination, die ein zugehöriges Gewicht von 70 bis 120 g aufweist, mittels Mikrowelle.

9. Verfahren nach Anspruch 8, wobei das Partikelgemisch Folgendes beinhaltet:
a) 15 bis 25 Gew.-% Leinsamen,
b) 5 bis 10 Gew.-% Chiasamen,
c) 3 bis 20 Gew.-% lösliche Ballaststoffe, ausgewählt aus der Gruppe bestehend aus resistentem Dextrin und FOS,
wobei die kombinierte Menge von d) und e) mindestens 15 Gew.-% des Partikelgemischs beträgt;
f) 15 bis 20 Gew.-% Ei.

10. Verfahren nach einem der Ansprüche 6 bis 9,
wobei die Kombination vor dem Garen in einer Tasse, einem Becher oder einer hohen Schüssel mit Wänden, die sich mindestens bis zur Höhe des gewünschten Lebensmittelprodukts nach dem Garen erstrecken, bereitgestellt wird;
die Kombination 70 bis 100 Sekunden lang bei voller Leistung in einer Mikrowelle gegart wird.

11. Verfahren nach einem der vorhergehenden Ansprüche, wobei das Ei in Form von Volleipulver, Eiklarpulver oder einer Kombination davon vorliegt.

12. Verfahren nach einem der vorhergehenden Ansprüche, wobei mindestens 90 Gew.-% des Partikelgemischs aus den angegebenen Bestandteilen gebildet werden.

13. Verfahren nach einem der vorhergehenden Ansprüche, wobei das flüssige Trägermaterial Wasser, Öl, Milch, Sahne, Joghurt oder milchfreie Alternativen davon umfasst oder aus diesen besteht oder Creme Fraiche oder Weichkäse umfasst.

14. Verfahren nach einem der vorhergehenden Ansprüche, wobei die Kombination 55-60 % Trägermaterial und 40-45 % des Partikelgemischs beinhaltet.

15. Verfahren nach Anspruch 6 oder Anspruch 8, wobei der Kuchen die Form einer Waffel, eines Muffins, eines Scones, eines Pfannkuchens oder eines Teekuchens aufweist.

## Revendications

1. Procédé de formation d'une tranche de pain ou d'un substitut de pain comprenant :
la fourniture d'un mélange particulaire incluant :
a. 10 à 25 % en poids de graines de lin,
b. 0 à 10 % en poids de graines de chia,
dans lequel la quantité combinée de a. et b. représente 10 à 30 % en poids du mélange particulaire ;
c. 3 à 20 % en poids de fibres solubles choisies parmi le groupe constitué par une dextrine résistante, un fructo-oligosaccharide (FOS), des galacto-oligosaccharides (GOS), des oligosaccharides de xylanes (XOS), des arabinoxylanes (AXOS), un bêta-glucane, une gomme arabique, une pectine, une carboxyméthylcellulose (CMC), et une gomme de guar hydrolysée,
d. du gluten, dans lequel le mélange particulaire comprend jusqu'à 30 % en poids de gluten,
e. 0 à 15 % en poids de protéine de légumineuses,
f. 0 à 9 % en poids d'une protéine choisie parmi le groupe constitué par une protéine de lactosérum et une protéine de blé hydrolysée,
dans lequel la quantité combinée de d., e., et f. représente au moins 13 % en poids du mélange particulaire,
g. 5 à 30 % en poids d'oeuf,
h. un agent de levage ;
dans lequel le mélange particulaire inclut moins de 5 % en poids de sucre,
dans lequel le mélange particulaire inclut moins de 5 % en poids de farine de blé ;
le mélange du mélange particulaire avec une matière de support liquide ;
la cuisson de la combinaison qui en résulte par micro-ondes.

2. Procédé selon la revendication 1 dans lequel le mélange particulaire inclut :
a. 15 à 25 % en poids de graines de lin,
b. 2 à 10 % en poids de graines de chia,
dans lequel la quantité combinée de a. et b. représente 20 à 30 % en poids du mélange particulaire ;
c. 3 à 20 % en poids de fibres solubles choisies parmi le groupe constitué par une dextrine résistante et un FOS,
d. 15 à 25 % en poids de gluten,
e. 5 à 10 % en poids de protéine de légumineuses,
f. 5 à 9 % en poids d'une protéine choisie parmi le groupe constitué par une protéine de lactosérum et une protéine de blé hydrolysée, dans lequel la quantité combinée de d), e) et f) représente au moins 25 % en poids du mélange particulaire,
g. 15 à 20 % en poids d'œuf.

3. Procédé de formation d'une tranche de pain ou d'un substitut de pain comprenant :
la fourniture d'un mélange particulaire incluant
a) 10 à 25 % en poids de graines de lin,
b) 0 à 10 % en poids de graines de chia,
dans lequel la quantité combinée de a) et b) représente 15 à 40 % en poids du mélange particulaire,
c) 3 à 20 % en poids de fibres solubles choisies parmi le groupe constitué par une dextrine, un fructo-oligosaccharide (FOS), des galacto-oligosaccharides (GOS), des oligosaccharides de xylanes (XOS), des arabinoxylanes (AXOS), un bêta-glucane, une gomme arabique, une pectine, une carboxyméthylcellulose (CMC), et une gomme de guar hydrolysée,
d) 0 à 30 % en poids de protéine de légumineuses,
e) 0 à 30 % en poids de protéine de lactosérum,
dans lequel la quantité combinée de d) et e) représente au moins 13 % en poids du mélange particulaire,
f) 5 à 30 % en poids d'œuf,
g) un agent de levage ;
dans lequel le mélange particulaire inclut moins de 5 % en poids de sucre,
dans lequel le mélange particulaire est exempt de gluten ;
le mélange du mélange particulaire avec une matière de support liquide ;
la cuisson de 50 à 100 g de la combinaison qui en résulte par micro-ondes.

4. Procédé selon la revendication 3 dans lequel le mélange particulaire inclut :
a. 15 à 25 % en poids de graines de lin,
b. 3 à 7 % en poids de graines de chia,
dans lequel la quantité combinée de a. et b. représente 20 à 30 % en poids du mélange particulaire,
c. 3 à 20 % en poids en poids de fibres solubles choisies parmi le groupe constitué par une dextrine résistante et d'un FOS
dans lequel la quantité combinée de d), et e) représente au moins 15 % en poids du mélange particulaire,
15 à 20 % en poids d'œuf.

5. Procédé selon l'une quelconque des revendications 1 à 4 dans lequel avant la cuisson, la combinaison est fournie sur un réceptacle avec des parois latérales basses ou sans parois latérales, et 50 à 100 g de la combinaison sont cuits dans un micro-onde pendant deux minutes ou moins à pleine puissance.

6. Procédé de formation d'un gâteau comprenant :
la fourniture d'un mélange particulaire incluant :
a. 7 à 25 % en poids de graines de lin,
b. 0 à 10 % en poids de graines de chia,
dans lequel la quantité combinée de a. et b. représente 10 à 30 % en poids du mélange particulaire,
c. 3 à 20 % en poids de fibres solubles choisies parmi le groupe constitué par une dextrine résistante, un fructo-oligosaccharide (FOS), des galacto-oligosaccharides (GOS), des oligosaccharides de xylanes (XOS), des arabinoxylanes (AXOS), un bêta-glucane, une gomme arabique, une pectine, une carboxyméthylcellulose (CMC), et une gomme de guar hydrolysée,
d. 10 à 30 % en poids de gluten,
e. 0 à 15 % en poids de protéine de légumineuses,
f. 0 à 9 % en poids de protéine de lactosérum,
dans lequel la quantité combinée de d., e., et f. représente au moins 13 % en poids du mélange particulaire, de manière générale au moins 20 % en poids ;
g. 5 à 30 % en poids d'oeuf,
h. un agent de levage ;
dans lequel le mélange particulaire inclut moins de 5 % en poids de sucre,
dans lequel le mélange particulaire inclut moins de 5 % en poids de farine de blé ;
le mélange du mélange particulaire avec une matière de support liquide ;
la cuisson par micro-ondes d'une unité de la combinaison qui en résulte ayant un poids associé de 70 à 120 g.

7. Procédé selon la revendication 6 dans lequel le mélange particulaire inclut :
a. 7 à 15 % en poids de graines de lin,
b. 2 à 10 % en poids de graines de chia,
dans lequel la quantité combinée de a. et b. représente 10 à 20 % en poids du mélange particulaire ;
c. 3 à 20 % en poids de fibres solubles choisies parmi le groupe constitué par une dextrine résistante et un FOS,
d. 10 à 20 % en poids de gluten,
e. 5 à 15 % en poids de protéine de légumineuses,
f. 5 à 9 % en poids de protéine de lactosérum,
dans lequel la quantité combinée de d., e., et f. représente au moins 20 % en poids du mélange particulaire ;
g. 15 à 20 % en poids d'œuf.

8. Procédé de formation d'un gâteau comprenant :
la fourniture d'un mélange particulaire incluant :
a) 10 à 30 % en poids de graines de lin,
b) 0 à 10 % en poids de graines de chia,
dans lequel la quantité combinée de a) et b) représente 15 à 40 % en poids du mélange particulaire ;
c) 3 à 20 % en poids de fibres solubles choisies parmi le groupe constitué par une dextrine, un fructo-oligosaccharide (FOS), des galacto-oligosaccharides (GOS), des oligosaccharides de xylanes (XOS), des arabinoxylanes (AXOS), un bêta-glucane, une gomme arabique, une pectine, une carboxyméthylcellulose (CMC), et une gomme de guar hydrolysée,
d) 0 à 30 % en poids de protéine de légumineuses,
e) 0 à 30 % en poids de protéine de lactosérum,
dans lequel la quantité combinée de d), et e) représente au moins 13 % en poids du mélange particulaire ;
f) 5 à 30 % en poids d'œuf,
g) un agent de levage ;
dans lequel le mélange particulaire inclut moins de 5 % en poids de sucre,
dans lequel le mélange particulaire est exempt de gluten ;
mélange du mélange particulaire avec une matière de support liquide ;
la cuisson par micro-ondes d'une unité de la combinaison qui en résulte ayant un poids associé de 70 à 120 g.

9. Procédé selon la revendication 8 dans lequel le mélange particulaire inclut :
a) 15 à 25 % en poids de graines de lin,
b) 5 à 10 % en poids de graines de chia,
c) 3 à 20 % en poids de fibres solubles choisies parmi le groupe constitué par une dextrine résistante et un FOS,
dans lequel la quantité combinée de d), et e) représente au moins 15 % en poids du mélange particulaire ;
f) 15 à 20 % en poids d'œuf.

10. Procédé selon l'une quelconque des revendications 6 à 9, dans lequel avant la cuisson, la combinaison est fournie dans une tasse, un mug ou un bol aux côtés hauts ayant des parois qui s'étendent au moins jusqu'à la hauteur du produit alimentaire souhaité après la cuisson ; la combinaison est cuite dans un micro-onde pendant 70 à 100 secondes à pleine puissance.

11. Procédé selon l'une quelconque des revendications précédentes dans lequel l'œuf est sous la forme de poudre d'œuf entier, de poudre de blanc d'œuf, ou d'une combinaison de celles-ci.

12. Procédé selon l'une quelconque des revendications précédentes dans lequel au moins 90 % en poids du mélange particulaire sont formés à partir des ingrédients spécifiés.

13. Procédé selon l'une quelconque des revendications précédentes dans lequel la matière de support liquide comprend ou est constituée par de l'eau, de l'huile, du lait, de la crème, du yaourt, ou des substituts de ceux-ci sans produits laitiers ou comprend de la crème fraiche ou du fromage à pâte molle.

14. Procédé selon l'une quelconque des revendications précédentes dans lequel la combinaison inclut de 55 à 60 % de matière de support et de 40 à 45 % du mélange particulaire.

15. Procédé selon la revendication 6 ou la revendication 8 dans lequel le gâteau est sous la forme d'une gaufre, d'un muffin, d'un scone, d'une crêpe ou d'une petite crêpe épaisse.
